# EUROPÄISCHE PATENTANMELDUNG

(11) **EP 2 086 077 A2**
(43) Veröffentlichungstag der Anmeldung: **05.08.2009**
(21) Anmeldenummer: 09150914.1
(22) Anmeldetag: 20.01.2009
(51) Int. Cl.: H02B 1/052

(54) **Montagesystem für elektrische und/oder mechanische Komponenten**

(30) Priorität: 02.02.2008 DE 202008001538 U; 04.02.2008 DE 202008001600 U; 19.11.2008 DE 202008015309 U
(71) Anmelder: Weidmüller Interface GmbH & Co. KG, 32758 Detmold (DE)
(72) Erfinder: Bury, Joachim, 32052 Herford (DE); Schulze, Rainer, 32760 Detmold (DE); Salomon, Thomas, 33330 Gütersloh (DE)
(74) Vertreter: Dantz, Jan Henning

(57) **Zusammenfassung**

Montagesystem zur Montage elektrischer und/oder mechanischer Komponenten an einer Montagebasis, die wenigstens ein Montagebasisprofil (1) bzw. wenigstens einen Montagebasiskörper aufweist, wobei an der Montagebasis, insbesondere an den Montagebasisprofilen, wenigstens eine Aufnahmekontur (6) ausgebildet ist, und dass das wenigstens eine Montagebasisprofil dazu ausgelegt ist, mit wenigstens einem weiteren oder mehreren weiteren aneinander reihbaren Montagebasisprofilen zu der übergreifenden Montagebasis zusammengesetzt zu werden, in der eine oder vorzugsweise mehrere der Aufnahmekonturen (6) in vorzugsweise zueinander paralleler Anordnung ausgebildet sind.

## Beschreibung

Die Erfindung betrifft ein Montagesystem für elektrische und/oder mechanische Komponenten nach dem Oberbegriff des Anspruchs 1.

Zur Montage anreihbarer elektrischer Komponenten bzw. Geräte wie z.B. Reihenklemmen oder Elektronikgehäusen für Elektroniken an sich beliebiger Art ist es seit langem bekannt, Tragschienen in hutförmiger Ausgestaltung zu verwenden, die auf einer Bodenplatte, beispielsweise eine Schaltschrankrückwand, befestigt sind.

In mechanischer Hinsicht hat sich diese Art der Befestigung zwar an sich bewährt. Nicht optimal sind die Tragschienen aber in Hinsicht auf ihre elektrische Funktion.

So ist es nach dem derzeitigen Stand der Technik oftmals notwendig, Energieversorgungsbusse, Datenbusse oder kombinierte Energieversorgungs- und Datenbusse in Anreihrichtung vorzusehen.

Dazu ist es bekannt, in die Tragschienen Busleisten einzurasten oder einzukleben, was aber aufwendig und relativ teuer und hinsichtlich der Funktionalität nicht optimal ist.

Es wurde daher bereits vorgeschlagen, aus Kunststoff bestehende Tragschienen zu realisieren, die auf eine Basisplatte aufgesetzt werden. Insofern wird auf die EP 1 443 617 A1 oder die DE 198 59 716 A1 verwiesen. Auch diese Konzepte sind aber noch relativ nahe an die an sich bekannte Ausgestaltung der hutförmigen Tragschienen angelehnt.

Die Erfindung geht vor diesem Hintergrund einen anderen Weg und stellt sich die Aufgabe, ein deutlich weiter vereinfachtes und flexibel konfigurierbares Montagesystem zu schaffen, das in einfacher Weise die mechanische Montage von elektrischen und/oder mechanischen Komponenten an einer Montagebasis erlaubt, aber auch hinsichtlich der Kontaktierung von Energie- und/oder Datenbussen fortschrittlich ist, d.h. einfach und besonders einfach handhabbar und dennoch besonders funktionssicher ist.

Die Erfindung löst diese Aufgabe durch den Gegenstand des Anspruches 1.

Die Erfindung löst sich damit deutlich von den eingangsbekannten Tragschienensystemen und vereinfacht sowohl den Aufbau des Schaltschrankes als auch die Montage und die Kontaktierung der zugehörigen elektrischen und/oder elektronischen Komponenten.

Geschaffen wird ein flexibel konfigurierbares System, das auf weitgehend beliebig zu einer Montagebasis kombinierbaren Montagebasisprofilen bzw. -Körpern aufbaut, die darüber hinaus dazu ausgelegt sind, in besonders vorteilhafter Weise mit den zu montierenden elektrischen Komponenten bestückt zu werden. Montierbar sind vorzugsweise auch rein mechanische Komponenten wie Schienenstücke, Montageelemente, Abschlusselemente und dgl..

Als besonders vorteilhaft zu erwähnen ist, dass die Montagebasisprofile direkt aneinander reihbar sind, um die übergreifende Montagebasis zu schaffen. Dabei kann die Montagebasis im einfachsten Fall aber auch nur aus nur einem der Montagebasisprofile bestehen. Die bevorzugten Montagebasisprofile sind insoweit besonders einfach und sicher handhabbar.

Der Wortteil "Profil" im Begriff "Montageprofil" ist nicht beschränkend zu verstehen. Der Begriff bezieht sich u.a. auf Strangpressprofile aber auch auf Extrusionskörper, Spritzgußteile oder anders gefertigte Teile, welche die im nachfolgenden Text angegebene Funktionalität haben.

Sie weisen vorzugsweise einen plattenförmigen Grundabschnitt auf, der dazu geeignet ist, in einfacher Weise direkt eine unterbrechungsfreie bzw. durchgängige oder aber zumindest einen Teil einer durchgängigen Schaltschrankrückwand o.dgl. auszubilden und vorzugsweise die Metallplatte zu ersetzen.

Die Montagebasis kann aber auch an bzw. auf einer Unterlage wie einer Wand, z.B. einer Maschinenwand o.dgl. befestigt werden.

Besonders bevorzugt ist die Ausbildung der Montagebasisprofile als Kunststoffkörper.

Ganz besonders bevorzugt wird direkt wenigstens eine zeilenförmige Aufnahmekontur oder eine Mehrzahl von zeilenförmigen Aufnahmekonturen nach Art von zeilenförmigen Ausnehmungen in den Montagebasisprofilen ausgebildet.

Die Ausbildung ist vorzugsweise derart, dass zuerst ein mechanisches Verrasten oder Vorverrasten der elektrischen Geräte und dann in einem weiteren Schritt ein Kontaktieren von Busleisten oder Busabschnitten an den Montagebasisprofilen erfolgt. Die Busleisten können in einfacher Weise für Energie- und oder Datenbusse verschiedenster Auslegung genutzt bzw. ausgelegt werden. Sie können durchgängig ausgelegt sein oder auch nur abschnittsweise gesetzt sein. Die Aufnahmekonturen können ganz allgemein betrachtet dazu ausgelegt sein, elektrisch leitende und/oder lichtleitende Kontakte verschiedenster Art aufzunehmen.

Dabei hat sich wiederum als besonders vorteilhaft herausgestellt, wenn die Aufnahmekonturen eine Art L-Form oder eine Art T-Form ausbilden, da es die L- oder die T-Form in besonders einfacher Weise erlaubt, an einem Grundschenkel eine mechanische Verrastung zu realisieren, wohingegen es der Querschenkel der L- oder T-förmigen Aufnahmekonturen erlaubt, erst im Anschluss an das Aufrasten der elektrischen Komponenten eine separate Kontaktierung einer Busleiste vorzunehmen. Denkbar wäre auch eine I-Form mit einer Vorverrastung und eine Endrast-/Schaltstellung in verschiedener Höhe in der Kontur.

Die Funktion mechanische Kontaktierung bzw. mechanische Arretierung und elektrische Kontaktierung können derart klar erkennbar voneinander getrennt und beispielsweise nacheinander vorgenommen werden.

Geschaffen wird auch eine elektrische und/oder mechanische Komponente für ein Montagesystem der vorstehenden Ansprüche, gekennzeichnet durch einen Komponentensockel nach einem der Kennzeichen der Ansprüche 22 bis 42. Die Komponenten/Geräte können auch übergreifende Baugruppen bilden. Die "elektrischen" Komponenten umfassen im Sinne dieser Anmeldung auch Komponenten mit lichtleitender Funktion.

Die Erfindung schafft auch ein Montagesystem zur Montage elektrischer und/oder mechanischer Komponenten an einer Montagebasis, bei dem die Montagebasis nur eines der Montagebasisprofile aufweist.

Vorzugsweise sind in den Wandabschnitten Aufsteckkonturen vorgesehen, die in einfacher Weise zur Befestigung von Kennzeichnungselementen wie Markierern o.dgl. dienen.

Nach einer bevorzugten Ausführung sind in den Aufnahmekonturen Fluidleitungsanschlüsse vorgesehen, was eine bei bestimmten Anwendungen praktische Option darstellt.

Besonders bevorzugt bestehen die Montagebasisprofile aus Kunststoff. Weitere vorteilhafte Ausgestaltungen der Erfindung sind den Unteransprüchen zu entnehmen.

Nachfolgend wird die Erfindung anhand von Ausführungsbeispielen unter Bezug auf die Zeichnungen näher beschrieben.
Es zeigt:
- Figur 1: eine perspektivische Ansicht eines ersten Montagebasisprofils;
- Figur 2: eine seitliche Ansicht des Montageprofils aus Figur 1;
- Figur 3: eine perspektivische Ansicht eines zweiten Montageprofils;
- Figur 4: eine Seitenansicht des Montageprofils aus Figur 3;:
- Figur 5: eine Seitenansicht des Verbindungsbereiches zwischen zwei Montagebasisprofilen nach Art der Figur 1 bis 5;
- Figur 6: eine perspektivische Ansicht eines Verbindungselementes zur Verbindung von Montagebasisprofilen nach Art der Figuren 1 bis 4;
- Figur 7: eine Seitenansicht des Verbindungselements aus Figur 6;
- Figur 8: einen Abschnitt eines Montagebasisprofils mit einem Rastelement;
- Figur 9: eine perspektivische Ansicht des Rastelementes aus Figur 8;
- Figur 10: eine Seitenansicht des Rastelementes aus Figur 9;
- Figur 11a: zwei miteinander durch ein alternativ ausgestaltetes Verbindungs-element verbundener Montagebasisprofile in einer Seitenansicht;
- Figur 11b: eine Ausschnittsvergrößerung aus Figur 11a;
- Figur 12: eine perspektivische Ansicht einer aus mehreren Montagebasisprofilen gebildeten Montagebasis;
- Figur 13: eine Seitenansicht der Montagebasis aus Figur 11 mit Busschienen und Energieversorgungsschienen;
- Figur 14: einen Gerätesockel in perspektivischer Ansicht;

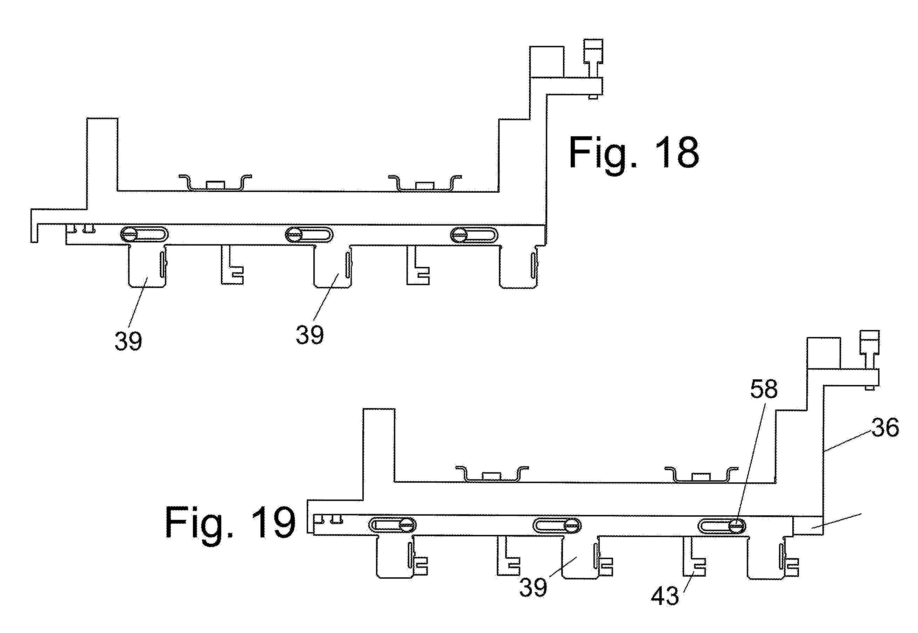

- Figur 15 bis 19: verschiedene Ansichten des Gerätesockels aus Figur 14;
- Figur 20: eine perspektivische Ansicht eines Komponentensockelrahmens für die Anordnung aus Figur 14 bis 19;
- Figur 21 bis 23: ein in drei aufeinanderfolgenden Schritten dargestelltes Montieren eines Gerätesockels auf einer Montagebasis nach Art der Figur 13;
- Figur 24: eine perspektivische Ansicht der Anordnung aus Figur 23;
- Figur 25: eine Ansicht eines elektrischen Gerätes mit einem Komponentensockel zur Montage auf Montagebasisprofilen bzw. einer Montagebasis nach Art der vorhergehenden Figuren;
- Figur 26: eine perspektivische Ansicht eines weiteren elektrischen Gerätes mit einem Komponentensockel;
- Figur 27: eine weitere perspektivische Ansicht des Gerätes aus Figur 26;
- Figur 28: eine perspektivische Darstellung eines dritten elektrischen Gerätes;
- Figur 29 bis 31: die Montage des elektrischen Gerätes aus Fig. 25 auf einer Montagebasis in drei aufeinanderfolgenden Schritten;

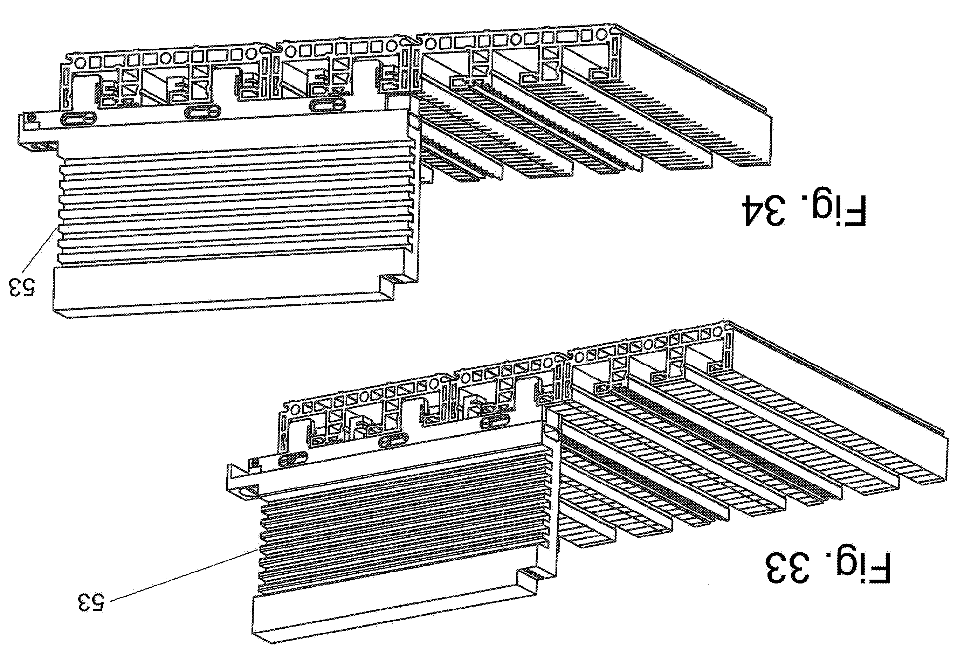

- Figur 32 bis 34: die drei Montageschritte aus Figur 30 bis 31 in perspektivischer Ansicht;
- Figur 35 und 36: die Montage des elektrischen Gerätes aus Fig. 25 auf einer Montagebasis, auf der bereits ein weiteres elektrisches Gerät montiert ist, welches auch das erste elektrische Gerät direkt kontaktieren soll;
- Figur 37: die Anordnung aus Figur 35 und 36 in perspektivischer Darstellung;

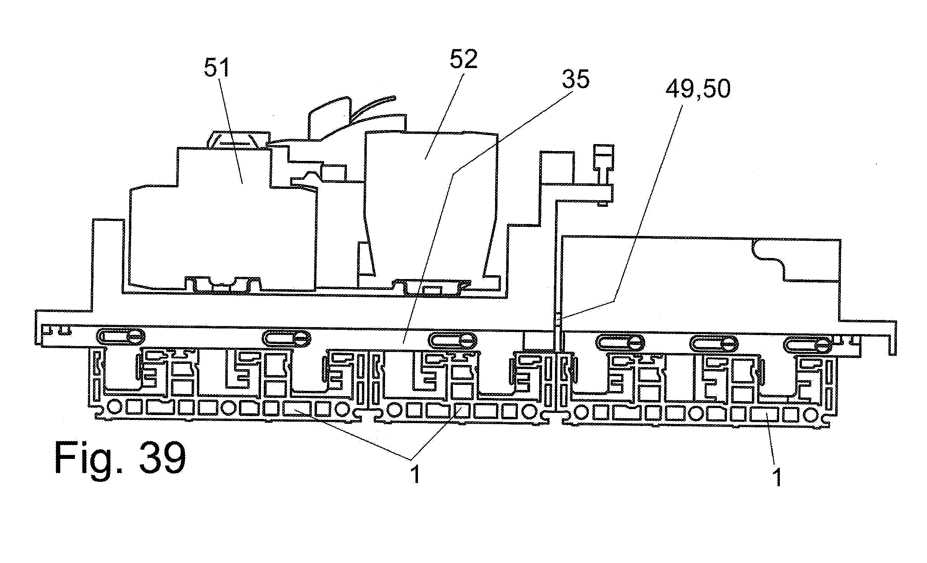

- Figur 38 und 39: weitere perspektivische Darstellung mit einer Ansicht einer Montagebasis mit darauf montierten elektrischen Geräten;
- Figur 40 bis 42: die Montage eines weiteren elektrischen Gerätes auf einer Montagebasis;
- Figur 43: eine perspektivische Ansicht einer Montagebasis mit einer Mehrzahl von darauf montierten elektrischen Geräten;
- Fig. 44: eine perspektivische Ansicht eines weiteren Montagebasisprofils;
- Fig. 45: den Verbindungsbereich zwischen zwei aneinander gereihten Montagebasisprofilen nach Art der Fig. 44;
- Fig. 46: eine perspektivische Ansicht eines weiteren Verbindungselementes;

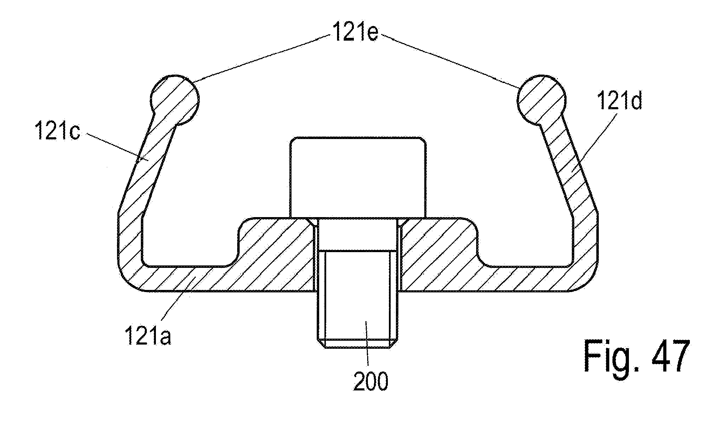

- Fig. 47: eine Seitenansicht des Verbindungselementes aus Fig. 46;
- Fig. 48: eine Seitenleiste;
- Fig. 49: eine perspektivische Ansicht einer Montagebasis;
- Fig. 50,51: verschiedene Ansichten einer weiteren Seitenleiste;
- Fig. 52: eine perspektivische Ansicht einer Montagebasis;
- Fig. 53 - 56: Ansichten verschiedener Busleisten und Stromschienen;
- Fig. 57a, b: Seitenansichten von Montagebasisanordnungen mit einer fingersicheren Busleiste/Stromschiene;
- Fig. 58: eine perspektivische Ansicht einer weiteren Montagebasiskonfiguration;
- Fig. 59: eine Ansicht eines weiteren Rastelementes;
- Fig. 60: eine Schnittansicht eines Abschnitts einer weiteren Montagbasiskonfiguration;
- Fig. 61: eine perspektivische Ansicht eines weiteren Komponentensockels;
- Fig. 62: ein Elektronikgehäuse;
- Fig. 63: den Gerätesockel aus Fig. 61 mit dem Elektronikgehäuse aus Fig. 62;

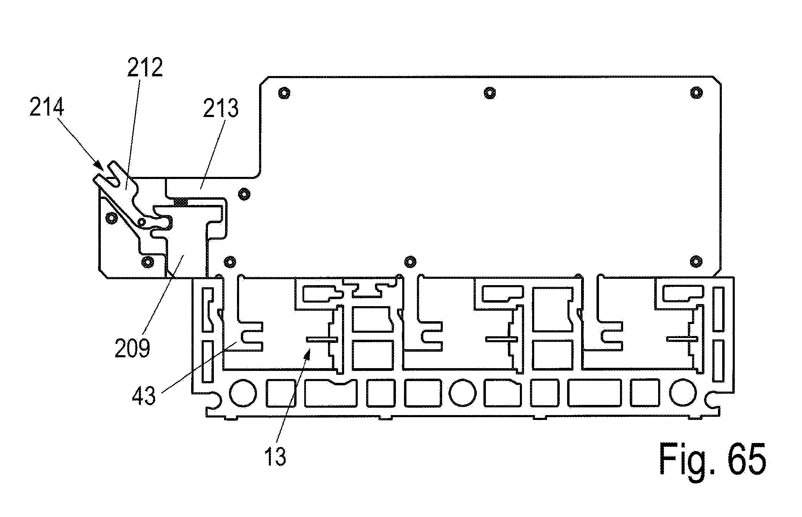

- Fig. 64 - 66: ein Aufsetzen eines weiteren Gerätes auf eine Montagebasis in mehreren Schritten.

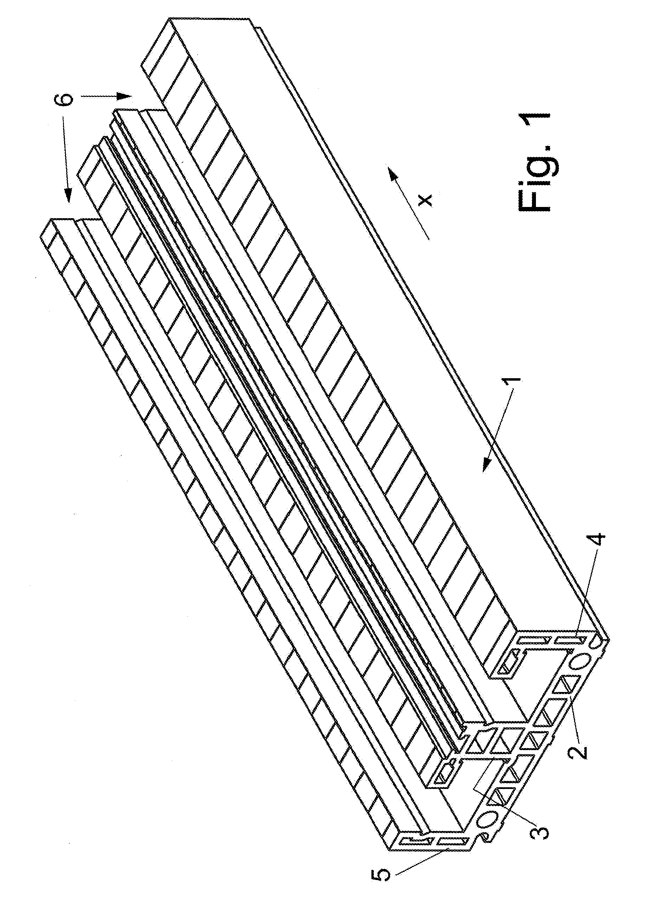

Figur 1 zeigt ein erstes Ausführungsbeispiel eines Montagebasisprofils 1, welches für sich allein oder im Zusammenspiel mit weiteren Montagebasisprofilen als Montagebasis zur Montage elektrischer Geräte bzw. elektrischer Komponenten dient.

Das Montagebasisprofil 1 ist hier in bevorzugter Ausgestaltung als Strangpressprofil aus einem isolierenden Kunststoff ausgebildet. Es weist vorzugsweise einen Grundabschnitt 2 auf, der bevorzugt als flächiger, innerhalb seines Außenrandes unterbrechungsfreier bzw. durchgehender Grundplattenabschnitt ausgestaltet ist.

Der Grundabschnitt 2 weist weiter in bevorzugter Ausgestaltung in Draufsicht rechteckige, langgestreckte Grundform auf, wobei die Fläche durchgängig, d.h. unterbrechungsfrei ausgebildet ist.

Nach einer besonders bevorzugten Ausgestaltung erstrecken sich senkrecht zum Grundabschnitt zu einer Montageseite hin mehrere Wandabschnitte 3, 4, 5, die hier sämtlichst zu einer Seite hin senkrecht vom Grundabschnitt 2 vorstehen.

Die Wandabschnitte 3, 4, 5 sind derart ausgestaltet, dass sie zeilenartige Aufnahmekonturen 6 in dem Montagebasisprofil definieren, in/an denen die elektrischen Komponenten/Geräte mit Befestigungsmitteln, die weiter unten näher beschrieben werden, montierbar sind.

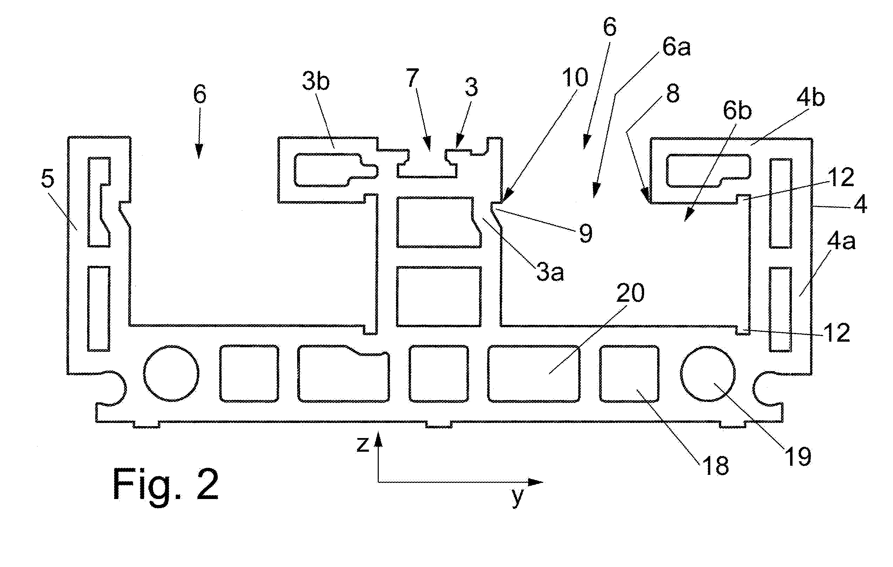

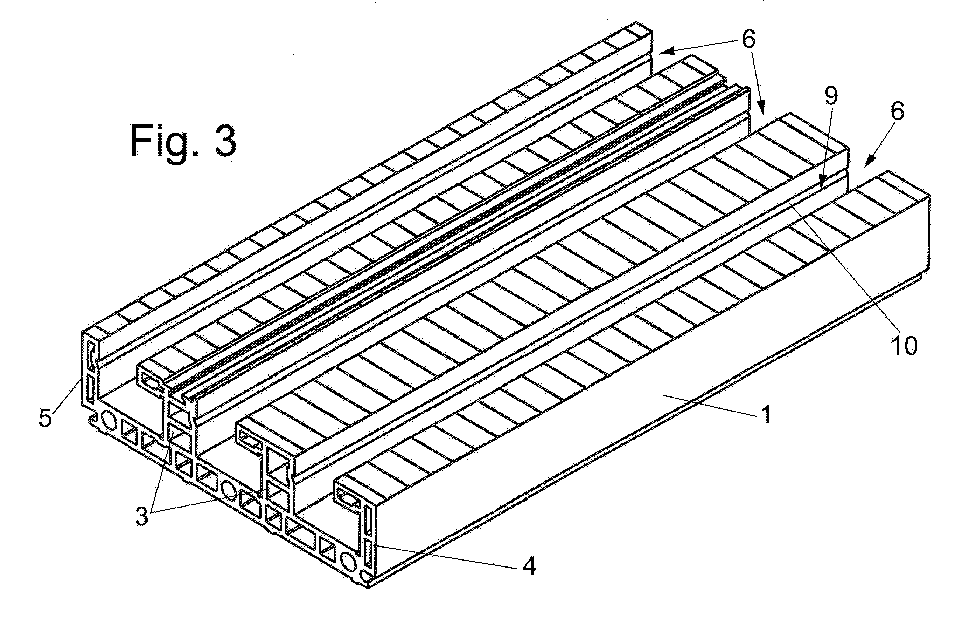

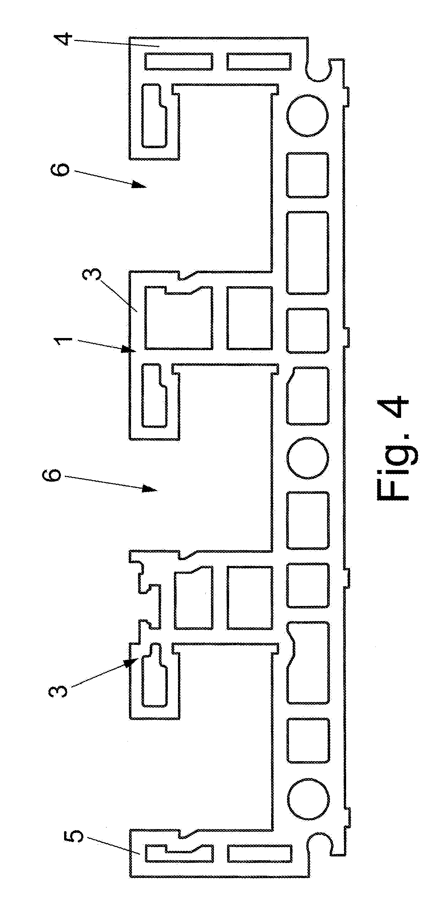

In bevorzugter Ausgestaltung ist in jedem Montagebasisprofil wenigstens eine Aufnahmekontur 6 ausgebildet. Bei dem Ausführungsbeispiel der Figur 2 sind zwei Aufnahmekonturen 6 vorgesehen (siehe auch Figur 2). Bei dem Ausführungsbeispiel der Figuren 3 und 4 sind dagegen drei der Aufnahmekonturen 6 vorgesehen. Es könnten auch in jedem Montagebasisprofil 1 mehr als drei der Aufnahmekonturen 6 vorgesehen sein, besonders bevorzugt wird aber eine Ausgestaltung von Montagebasisprofilen 1 mit zwei oder drei Aufnahmekonturen 6, da sich derart sowohl kleinere als größere Varianten der Montagebasis zur Montage elektrischer Komponenten bzw. elektrischer Geräte und/oder mechanischer Komponenten realisieren lassen.

Um eine größere Montagebasis zu schaffen, werden einfach mehrere der Montagebasisprofile bzw. -körper 1 in einer Ebene direkt aneinander gesetzt und miteinander verbunden, was nachfolgend noch näher beschrieben wird.

Die Aufnahmekonturen 6 sind vorzugsweise senkrecht zu einer in Figur 1 eingezeichneten Haupterstreckungsrichtung X, d.h. in Richtung Y in einem fest beabstandeten Raster zueinander angeordnet.

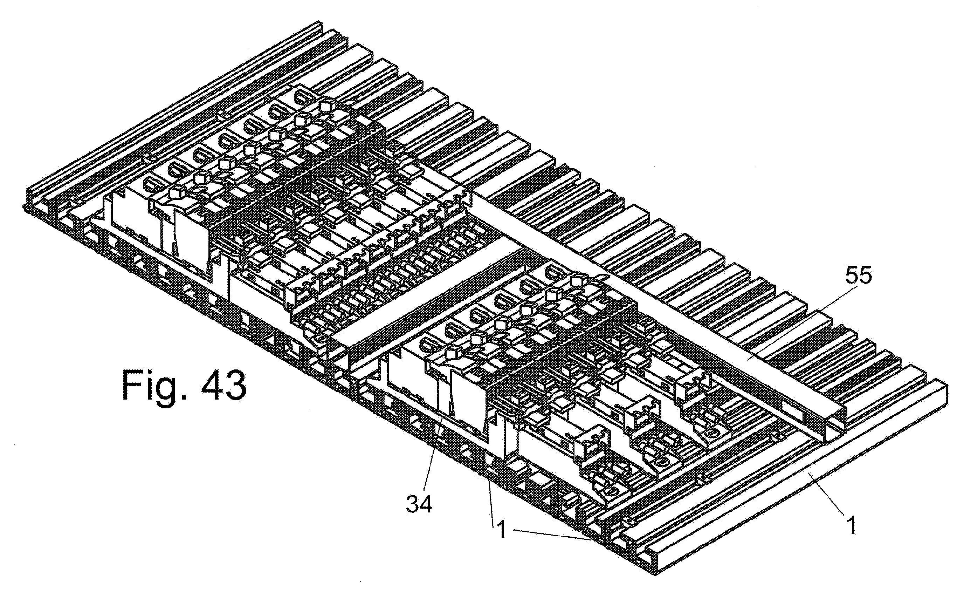

Die Aufnahmekonturen 6 sind ferner derart ausgestaltet, dass in bzw. an ihnen die elektrischen Komponenten in der Haupterstreckungsrichtung X anreihbar sind (siehe Fig. 43). Sie sind damit beispielsweise zur Aufnahme und Arretierung sowie vorzugsweise auch zur Kontaktierung von elektrischen Komponenten wie Reihenklemmen verschiedenster Art, Elektronikgehäusen usw. ausgelegt.

In einer besonders bevorzugten Ausgestaltung, wie sie in den Figuren dargestellt ist, weisen die Aufnahmekonturen im Querschnitt bzw. in der Seitenansicht (hier in der Y-Z-Ebene) eine L-Form auf. Diese Ausgestaltung wird besonders bevorzugt. Alternative Ausgestaltungen z.B. in T-Form oder I-Form oder in noch weiter anderer Form sind denkbar.

Nachfolgend wird der Grundschenkelbereich der Aufnahmekonturen 6 mit dem Bezugszeichen 6a und ein Querschenkelbereich der rinnenartigen Aufnahmekonturen mit dem Bezugszeichen 6b bezeichnet.

Der Wandabschnitt 3, welcher bei dem Montagebasisprofil 1 der Figur 1 und 2 zwei benachbarte Aufnahmekonturen 6 nach Art einer Zwischenwand voneinander trennt, ist entsprechend ebenfalls in L-Form ausgestaltet und weist einen Grundschenkel 3a und einen Querschenkel 3b auf, der sich wieder in bevorzugter Ausgestaltung parallel zum Grundabschnitt 2 erstreckt, wobei der Längsschenkel 3a senkrecht zum Grundabschnitt 2 ausgebildet ist.

Die weiteren Wandabschnitte 4 und 5 bilden hier in Y-Richtung, d.h. senkrecht zur Haupterstreckungsrichtung bzw. Anreihrichtung X die seitlichen Begrenzungswände der Montagebasisprofile 1. Dabei sind die Wandabschnitte 4, 5 hier ferner in vorteilhafter Weise derart ausgestaltet, dass sich in ihrem Zusammenspiel eine Trennwandkontur nach Art des mittleren Wandabschnittes 3 ausbilden. Aus zwei Wandabschnitten 4 ist auch eine Art T-förmiger Trennwand realisierbar, was weiter unten näher beschrieben wird.

Die Wandabschnitte 3, 4, 5 können z.B. auch zur rastenden/steckbaren Anordnung an plattenartigen Basiselementen (hier nicht dargestellt) ausgelegt sein.

Der Wandabschnitt 4 weist eine L-Form auf, die sich aus dem Zusammenspiel eines im Vergleich zum Grundschenkel 3a in Y-Richtung schmaleren Grundschenkels 4a mit einem der Kontur des Querschenkels 3b im Wesentlichen entsprechenden Querschenkel 4b ergibt.

Der Wandabschnitt der Wandabschnitt 5 ist dagegen nicht L-förmig ausgestaltet sondern derart ebenflächig, dass er in der Montagesituation, in welche er an dem Grundschenkel 4a eines Wandabschnittes 4 eines benachbarten Montagebasisprofils anliegt, im Zusammenspiel mit dem Wandabschnitt 4 eine vollständige Kontur eines Grundschenkels 3a ergibt.

Die darstellte Form der Montagebasisprofile 1 ist besonders vorteilhaft, aber nicht zwingend. Im Rahmen der Erfindung sind verschiedenste Variationen der Montagebasisprofile realisierbar.

Es ist zweckmäßig, in der von den Grundabschnitten 2 abgewandten Seite der Wandabschnitte 3 ferner rinnenartige Aufsteckkonturen 7 zum Anbringen von Kennzeichnungsmitteln wie Markierern und dgl. vorzusehen.

In bevorzugter Ausgestaltung dienen jeweils die Kantenbereiche im Übergang zwischen dem Grundschenkel 6a und dem Querschenkel 6b der Aufnahmekonturen 6 - also untere Kanten der Querschenkel 3b, 4b in einfacher Weise als Rastkanten 8 zum Verrasten zu montierender elektrischer Komponenten.

Diese Rastkanten werden in weiter bevorzugter Ausgestaltung vorzugsweise durch hinterschnittartige Nuten 9 in den seitlichen Wandungen der Wandabschnitte 3 bzw. 5 ergänzt.

Die Nuten 9 sind dabei bevorzugt derart angeordnet, dass sie eine weitere Rastkante 10 definieren, die in Z-Richtung d.h. senkrecht zur Ebene der Grundabschnitte 2 vorzugsweise den gleichen Abstand zu den Grundabschnitten aufweist wie die Rastkante 8.

Damit sind hier die Rastkanten 8 und 10 einzeln oder gemeinsam als Rastkanten zum Verrasten korrespondierender Rastmittel der aufzurastenden elektrischen Komponenten nutzbar.

Die Montagebasisprofile 1 verfügen weiter in bevorzugter Ausgestaltung über eine Montagekontur 12 zur Montage von Busleisten 13, 14 wie sie in Figur 3 zu erkennen sind.

Der Begriff "Busleiste" ist nicht einschränkend zu verstehen. Er umfasst verschiedene Varianten sowohl von Energiebussen als auch von Datenbussen oder auch gemischte Auslegungen als kombinierter Energie- und Datenbus. Denkbar sind auch rein metallische Schienen, wenn z.B. ein größerer leitender Querschnitt gewünscht ist, wobei die metallischen Schienen dann vorzugsweise als in die Aufnahmen 12 einsteckbar ausgelegt sind.

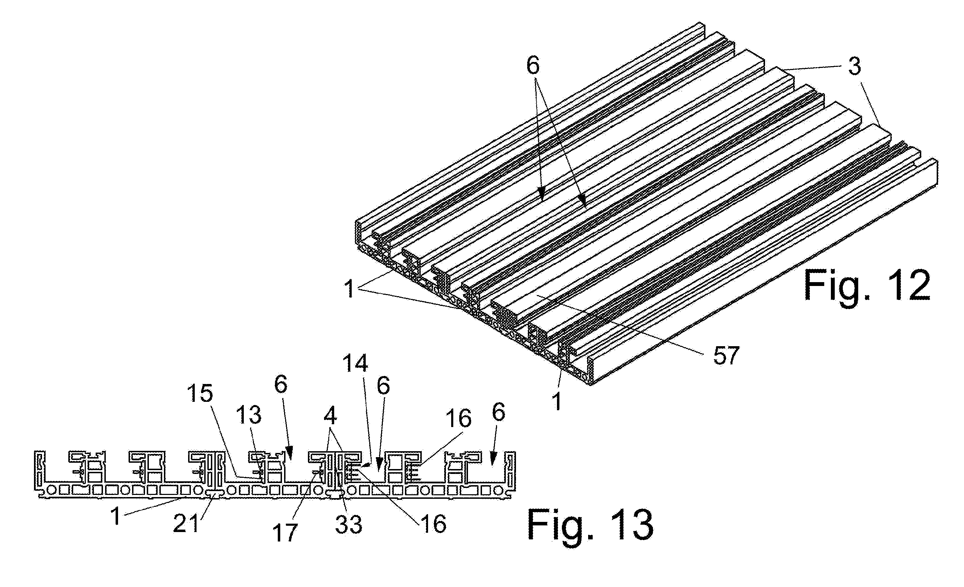

Die Busleisten weisen in bevorzugter Ausgestaltung einen Grundleistenabschnitt 15 sowie eine oder mehrere senkrecht von diesen vorstehende Stromschienen 16, 17 auf. In Figur 13 sind beispielhaft in einem Energiebus wenigstens eine oder zwei Stromschienen 16 vorgesehen.

Nach einer bevorzugten Auslegung als Datenbus oder kombinierter Energie- und Datenbus sind mehr als zwei, beispielweise vier Stromschienen 17 vorgesehen, die bevorzugt parallel zueinander ausgerichtet sind. Denkbar wäre es im Rahmen der Erfindung auch, die Grundleistenabschnitte direkt an die Montagebasisprofile anzuformen und diese dann mit Stromschienen zu versehen.

Hier sind die Stromschienen 16, 17 in weiter bevorzugter Ausgestaltung als Stromschienen ausgebildet, die senkrecht von Grundleistenabschnitten 15 der Busleisten 13, 14 vorstehen, so dass sie wie Steckerabschnitte bzw. Stiftabschnitte nutzbar sind, welche von korrespondierenden Buchsenabschnitten bzw. tulpenartigen Kontaktabschnitten der elektrischen Komponenten kontaktierbar sind.

Derart kann in einfacher Weise eine Energieversorgung der elektrischen Komponenten sichergestellt werden. Es kann auch in einfacher Weise wenigstens eine der elektrischen Komponenten als Einspeisemodul genutzt werden. Es ist ferner möglich, Informationen bzw. Daten über die Busleisten 13, 14 auszutauschen.

Alternativ wäre es auch denkbar, die Stromschienen 16, 17 oder aber Leiterbahnen an der Oberfläche der Grundleistenabschnitte mit Federkontakten zu kontaktieren (hier nicht dargestellt).

Die Montagekonturen 12 sind bevorzugt im Querschenkel 6b vorgesehen. Dazu ist jeweils in den Kantenbereichen am vom Grundschenkel 6a abgewandten Ende des Querschenkels 6b in den Wandabschnitten 3, 4 im Übergangsbereich zwischen dem Querschenkel 3b und dem Längsschenkel 3a bzw. dem Querschenkel 4b und dem Längsschenkel 4a eine Aufnahmenut 12 ausgebildet und zum anderen vorzugsweise im weiteren Kantenbereich zwischen dem Längsschenkel 3a bzw. Längsschenkel 4a und dem Grundabschnitt 2 eine weitere Aufnahmenut 12.

In diese Aufnahmenuten, welche hier in bevorzugter Ausgestaltung die Montagekonturen 12 ausbilden, kann der vorzugsweise plattenartige Grundleistenabschnitt 15 der Busleisten 13, 14 von der Seite her eingeschoben werden, was sich aus Figur 13 ergibt.

Derart stehen die Stromschienen 16, 17 parallel zur X-Y-Ebene in den Querschenkelbereich 6b hinein vor. Sie erstrecken sich in Haupterstreckungsrichtung X vorzugsweise über die gesamte Länge der Montagebasisprofile 1. Diese Ausgestaltung ist besonders vorteilhaft, aber nicht zwingend.
Es ist auch denkbar, mehrere einzelne Leistenabschnitte von Busleisten 13, 14 zu setzen (hier nicht dargestellt).

Es ist auch vorstellbar, die Busleiste an anderer Stelle der Aufnahmekontur als in den Abbildungen dargestellt anzuordnen, wobei dann eine entsprechend modifizierte Kontaktierungsmechanik an den elektrischen Geräten notwendig wäre.

Hervorzuheben ist, dass in der bevorzugten Ausgestaltung die Busleisten 13, 14 einerseits einfach montierbar sind und andererseits unter den Querschenkeln 3a, 3b bzw. 4b der Wandabschnitte 3 bzw. der Trennwände liegen, so dass sie relativ berührungssicher oder bei entsprechender Ausgestaltung der Geometrie (Weite der Kontur, Trennwände usw.) ganz berührungssicher angeordnet sind.

Die bevorzugte Ausgestaltung macht es ferner möglich, elektrische Komponenten bzw. Geräte zunächst in die Aufnahmekonturen 6 einzurasten und erst in einem weiteren Montageschritt die Kontaktierung zu den Stromschienen bzw. Busleisten zu realisieren.

Zu erwähnen ist, dass aus Gründen der Materialersparnis sowie auch ggf. zur Erhöhung der Steifigkeit in den Montagebasisprofilen Hohlkanäle 18, 19, 20 ausgebildet sind. Es ist denkbar - hier aber nicht vorgesehen - diese Hohlkanäle auch für weitere Funktionen wie beispielsweise für das Verlegen von Stromschienen, die Durchleitung von Kühlfluiden und/oder eine stirnseitige Befestigung und/oder ein mechanisches Verbinden und/oder elektrisches Verbinden zu nutzen. o.dgl. zu nutzen.

Denkbar wäre es auch, in den Aufnahmekonturen - z.B. in einem markierten Rasteabstand in X-Richtung - Fluidleitungsanschlüsse vorzusehen, um z.B. Fluidmodule und/oder Hybridmodule mit z.B. elektrischer und/oder fluider und/oder mechanischer Funktion vorzusehen. Der Begriff "mechanische Komponente" ist insofern nicht zu eng auszulegen. Er umfasst auch Fluidmodule für Druckluftversorgungen und/oder - steuerungen.
Figur 3 veranschaulicht ein Montagebasisprofil 1 mit drei parallel zueinander angeordneten Aufnahmekonturen 6, die jeweils in der vorstehend beschriebenen Art ausgestaltet sind.

Dabei sind hier zwei der mittleren Wandabschnitte 3 vorgesehen und an den äußeren Rändern der Montagebasisprofile 1 wiederum die zuvor beschriebenen Wandabschnitte 5, 4, welche im Zusammenspiel einen vollständigen Trennwandabschnitt 3 zur Trennung von zwei Aufnahmekonturen 6 ausbilden.

Figur 4 zeigt das Montagebasisprofil 1 der Figur 4 in einer Seitenansicht.

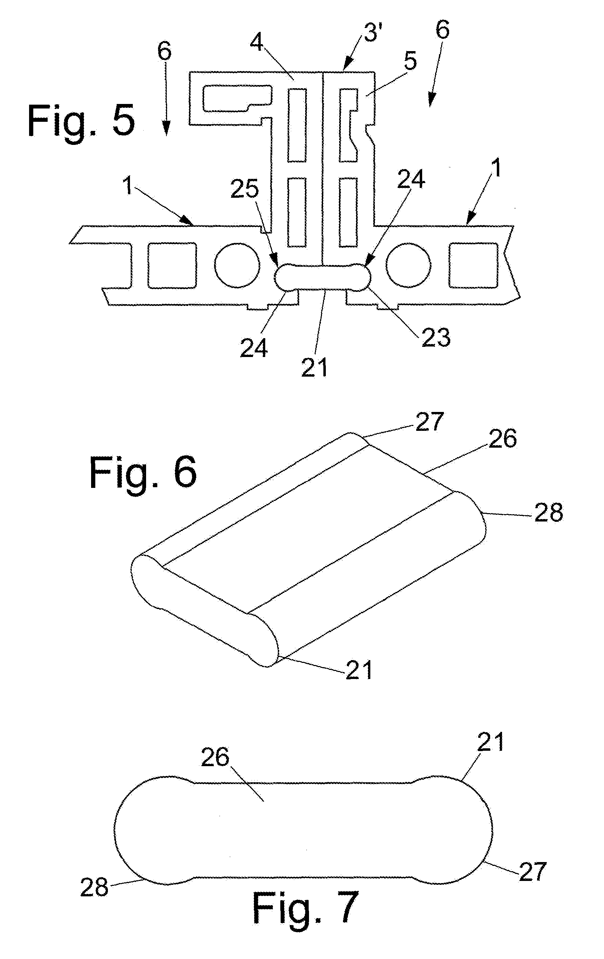

Figur 5 veranschaulicht, wie zwei der Montagebasisprofile 1 zu einer übergreifenden Montagebasis zusammengesetzt werden.

Wie zu erkennen, wird der eine seitliche Wandabschnitt 5 des einen Montagebasisprofils 1 seitlich direkt an den korrespondierenden Wandabschnitt 4 des sich anschließenden Montagebasisprofils 1 angesetzt.

Die Wandabschnitte 4 und 5 bilden derart in ihrem Zusammenspiel einen Wandabschnitt 3', dessen Kontur der Kontur der Wandabschnitte 3, welche die Aufnahmekonturen 6 voneinander trennen, entspricht.

Es ist denkbar, dass aneinander gesetzte Montagebasisprofile 1 an zueinander korrespondierenden Rastkonturen wie Zapfen und Ausnehmungen in den Wandabschnitten 4 und 5 direkt aneinander verrastet werden (hier nicht dargestellt).

Vorzugsweise ist vorgesehen, dass die aneinander gesetzten Montagebasisprofile 1 mit Verbindungselementen 21, 22 miteinander verbunden werden.

Nach Figur 5 sind diese Verbindungselemente 21 derart ausgestaltet, dass sie seitlich in Montagenuten 24, 25 in den zueinander liegenden Wandabschnitten 4, 5 einschiebbar sind.

Dabei wird eine Art Montagekanal aus den Montagenuten 24 und 25 gebildet, der an seinen voneinander abgewandten Enden jeweils etwas aufgeweitet ausgebildet ist, so dass in ihn eines oder mehrere der in Figur 6 dargestellten Verbindungselemente 21 einschiebbar ist.

Vorzugsweise wird an den beiden Enden (bezogen auf die Haupterstreckungsrichtung X) der Montagebasis in die Montagebasisprofile 1 jeweils wenigsten eines der Verbindungselemente 21 eingesetzt.

Es ist auch denkbar, dass sich die Verbindungselemente 21 leistenförmig über die gesamte Länge der Montagebasisprofile 1 erstrecken.

Nach Figur 6 und 7 sind die Verbindungselemente 21 im Wesentlichen plattenförmig ausgebildet, wobei an den Enden eines mittleren Plattenabschnittes 26 Verbreiterungen 27a, 27b ausgebildet sind.

Wird ein derartiges Verbindungselement 21 seitlich in die Montagenuten 24, 25 bzw. in den Montagekanal, der sich aus dem Zusammenspiel der Montagenuten 24, 25 ergibt, eingeschoben, werden die Montagebasisprofile 1 einfach auf sichere Weise aneinander arretiert, so dass sich eine übergeordnete Montagebasis ausbildet.

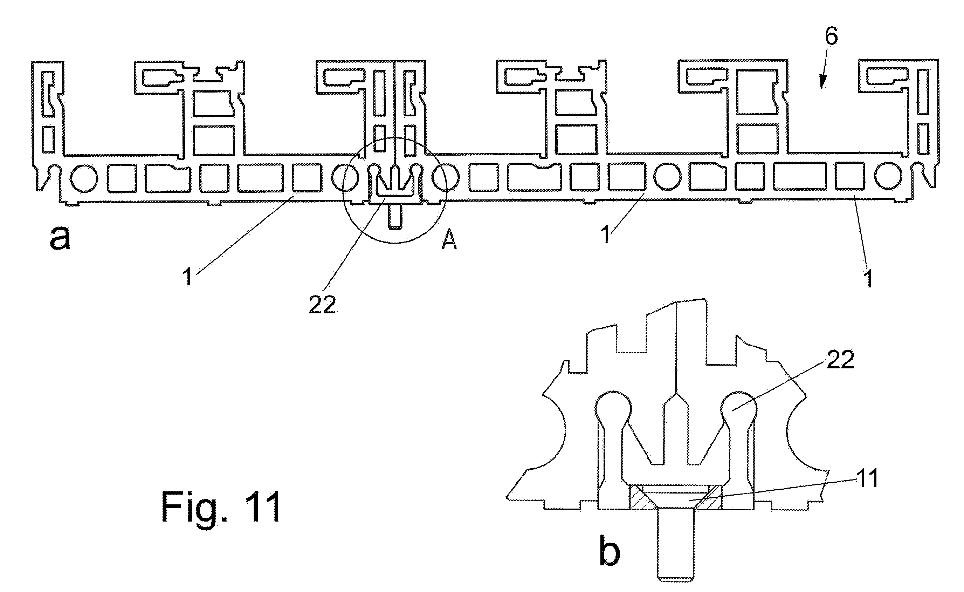

Nach Figur 11a und 11b ist dagegen vorgesehen, die Verbindungselemente 22 derart auszugestalten, dass sie im wesentlichen im Querschnitt eine Art U-Form aufweisen, wobei die Wandabschnitte 4 , 5, die aneinander gesetzt werden, derart ausgestaltet sind, dass sie von oben auf das U vorzugsweise rastend aufsetzbar sind bzw. derart, dass die Verbindungselemente 22 von der den Aufnahmekonturen 6 abgewandten Seite her in den Grundabschnitt 2 vorzugsweise rastend einsetzbar sind.
Damit halten die Verbindungselemente 22 klammerartig zwei der Montagebasisprofile 1 aneinander.

Damit können die Trägerprofile bzw. Montagebasisprofile auch nach dem Schaltschrank-Einbau nach vorne entnommen und ausgetauscht werden.

Das Verbindungselement 22 kann als Meterware vorliegen, und nach dem Verbinden zusammen mit den Trägerprofilen eine glatte Ebene bilden. Diese Ebene kann eine (tragende) Schaltschrank-Rückwand aus Metall ersetzen, oder diese auf eine dünne metallische Rückwand oder Beschichtung reduzieren.

Es ist auch denkbar, die Verbindungselemente 22 mit einem Befestigungselement wie einer Schraube 11 an einer Maschinenwand oder dgl. - auch an einer Schaltschrankwand, wenn vorhanden - zu befestigen. Die Verbindungselemente 22 sind damit besonders vorteilhaft.

In diesem Zusammenhang sei angemerkt, dass der Grundabschnitt 2, wenn er in bevorzugter Ausgestaltung als unterbrechungsfreie durchgehende Fläche in der X-Y-Ebene ausgebildet ist, im Zusammenspiel über mehrere Montagebasisprofile 1 hinweg oder bereits bei nur einem einzigen Montagebasisprofil 1 entweder als Grundwand z.B. eines Schaltschrankes direkt nutzbar ist oder aber auf einer Schaltschrankrückwand oder aber einer Maschinenwand o.dgl. montierbar ist.

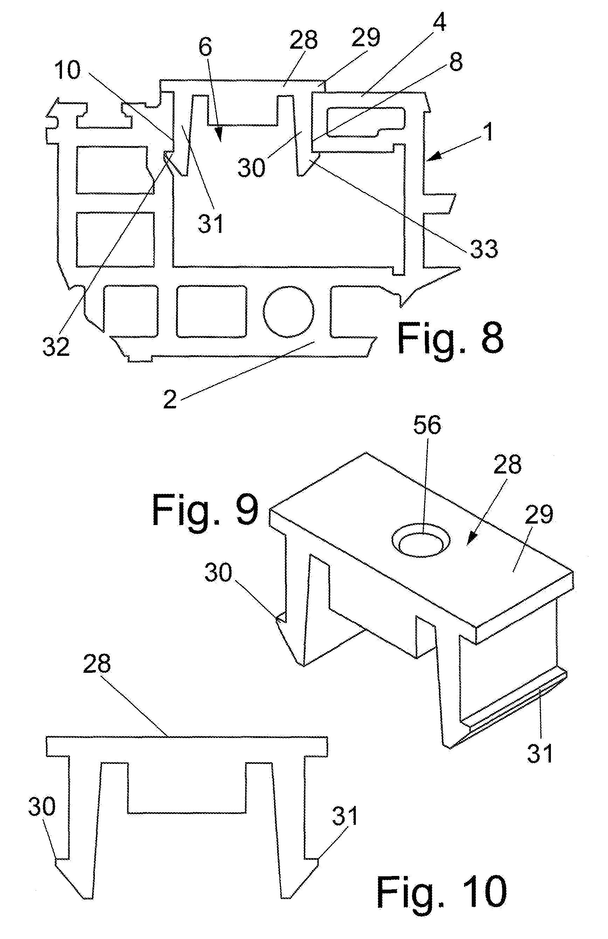

Figur 8 veranschaulicht, das in den Aufnahmekonturen 6 Rastelemente 28 verrastbar sind, die jeweils einen Auflageabschnitt 29 aufweisen, der jedenfalls in Randbereichen auf den vom Grundabschnitt 2 abgewandten Außenflächen der Wandabschnitte 3, 4 aufliegt Die Rastelemente greifen mit Rastfüßen 30, 31 mit Rastkanten 32, 33 in die Aufnahmekontur 6 ein, wobei die Rastkanten 30, 31 nach Art von Montagefüßen die korrespondierenden Rastkanten 8 und 10 in der Aufnahmekontur 6 hintergreifen, so dass das Rastelement 28 in der Aufnahmekontur 6 sicher verrastet und montiert ist.

Das Rastelement 28 kann, wie in Figur 9 dargestellt, beispielsweise eine Schraubbohrung 56 mit einem Innengewinde zur Montage von elektrischen Geräten o.dgl. aufweisen. Diese Schraubbohrung kann dazu genutzt sein, um beispielsweise eine obere Montageplatte zu montieren. Sie ist vorzugsweise derart ausgelegt, dass sie sich beim Montieren aufweitet, so dass sich dass Rastelement insgesamt aufweitet und an den Rastkanten mit erhöhter Kraft gesichert wird.

Das Rastelement 28 ist derart in einfacher Weise dazu nutzbar, in einer ersten Montageart elektrische Komponenten bzw. Geräte oder aber auch Profile, Wandabschnitte oder dgl. an der Montagebasis zu montieren.

Figur 12 veranschaulicht, wie aus drei Montagebasisprofilen 1 eine übergeordnete Montagebasis zusammensetzbar ist.

Von besonderem Interesse ist, dass hier zwei der Montagebasisprofile 1 vorteilhaft derart aneinandergesetzt sind, wie sich dies aus Figur 5 ergibt, d.h. die Wandabschnitte 4, 5 bilden zusammen einen Grundwandabschnitt 3 aus, der als Trennwand zwischen zwei Aufnahmekonturen genutzt ist.

Es ist aber auch denkbar, die Montagebasisprofile quasi in umgekehrter Anordnung derart aneinander zu setzen, dass jeweils zwei der Wandabschnitte 4 in L-Form mit ihren Grundschenkeln aneinanderliegen.

Derart wird ein T-förmiger Wandabschnitt 57 gebildet, der bewirkt, dass sich die Ausrichtung der L-förmigen Aufnahmekonturen beidseits des Wandabschnittes quasi umkehrt, d.h. auf einer Seite des T-förmigen Wandabschnittes 57 liegen die Grundschenkel in Richtung +Y und auf der anderen Seite des T-förmigen Wandabschnittes liegen die Grundschenkel in Richtung -Y. Dies ergibt sich insbesondere auch gut aus Figur 13. Dies ermöglicht weitere Kontaktierungs- und Montagevarianten insbesondere im Zusammenspiel mehrerer senkrecht zur Anreihrichtung miteinander zu verbindender elektrischer Geräte (die z.B. im Zusammenspiel Motorstarteranordnungen ausbilden können).

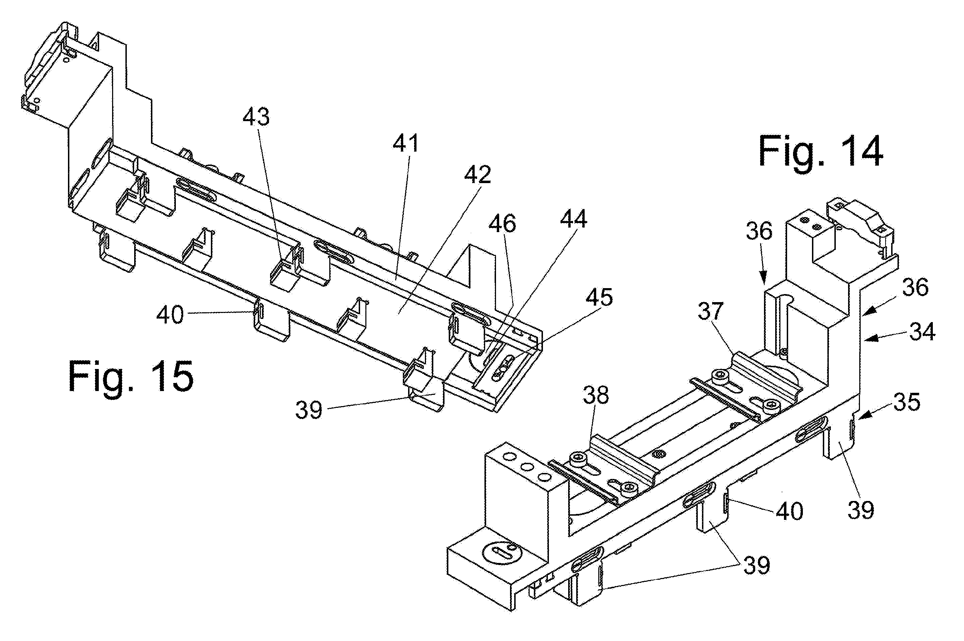

Figur 14 zeigt einen als Montageadapter ausgestalteten Gerätesockel 34 in perspektivischer Ansicht.

Der Gerätesockel 34 weist einen hier einstückig mit dem übrigen Gerätesockel verbundenen, aber auch separat herstellbaren bzw. separat als Einheit auslegbaren (hier nicht dargestellt) Komponentensockel 35 auf, der zur eigentlichen Montage des Gerätesockels 34 oder eines Elektronikgehäuses oder dgl. an den Montagebasisprofilen 1 dient und einen eigentlichen Gerätesockelabschnitt 36, der an sich in beliebiger Kontur ausgestaltet werden kann und der hier derart ausgestaltet ist, dass er hutförmige Tragschienenabschnitte 37, 38 aufweist, die sich in Haupterstreckungsrichtung X erstrecken, so dass im Zusammenspiel mehrer aneinander gereihter Gerätesockel 34 durchgängige hutförmige Tragschienen ausgebildet werden, an denen elektrische Geräte und Komponenten wie beispielsweise Reihenklemmen und Elektronikgehäuse befestigt werden können, die eine entsprechende, in an sich bekannter Art ausgestaltete Montagekontur zur Montage an einer Tragschiene in hutförmiger Ausgestaltung aufweisen.

Von besonderem Interesse ist der eigentliche Komponentensockel 35. Der Komponentensockel 35 weist wenigstens einen Rastfuß 39, der dazu ausgelegt ist, in der Aufnahmekontur 6 verrastet zu werden. Derart kann in besonders einfacher Weise die Verrastung elektrischer Komponenten oder Geräte, die auf der Montagebasis zu verrasten sind, erfolgen.

Entweder ist dabei an die elektrischen Geräte und Komponenten z.B. an deren Gehäuse jeweils wenigstens einer der Rastfüße angeformt oder es wird ein separater Komponentensockel 35 geschaffen, der einen derartigen Rastfuß aufweist.
Natürlich können auch mehrere Rastfüße vorgesehen sein.

Bei dem in Figur 14 dargestellten Ausführungsbeispiel sind insgesamt sechs Rastfüße 39 vorgesehen, die in zwei Reihen zu je drei Rastfüßen angeordnet sind.

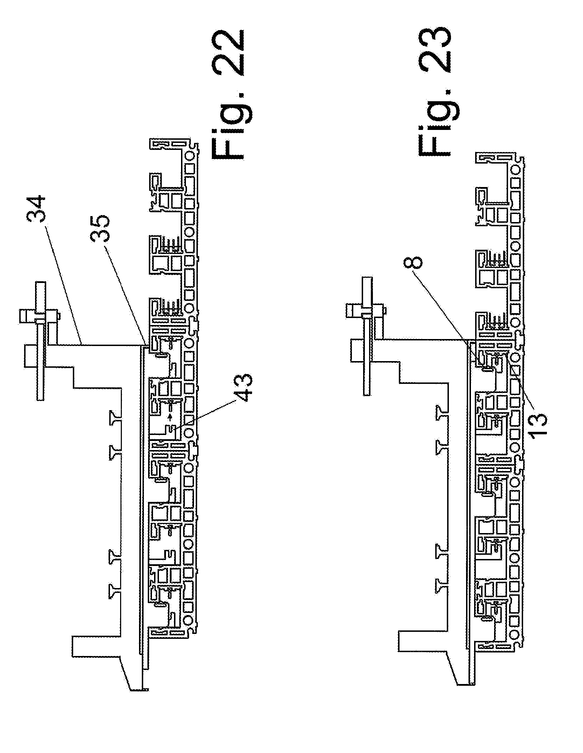

Dies dient dazu, den Komponentensockel 35 besonders sicher in drei nebeneinander liegenden, zueinander parallelen Aufnahmekonturen 6 zu verrasten, wobei jeweils zwei benachbarte Rastfüße 39 in jeweils eine der Aufnahmekonturen eingreifen.
Die Rastfüße weisen hier im wesentlichen eine Kontur auf, die der Kontur der Grundschenkel 6a der Aufnahmekonturen 6 entspricht, wobei sie wenigstens einen (oder mehrere) seitlichen Vorsprung 40 aufweisen, der dazu ausgelegt ist, mit der entsprechenden Rastkante 8 und/oder 10, in bevorzugter Ausgestaltung der Rastkante 8 (siehe z.B. Figur 23) zusammenzuwirken.

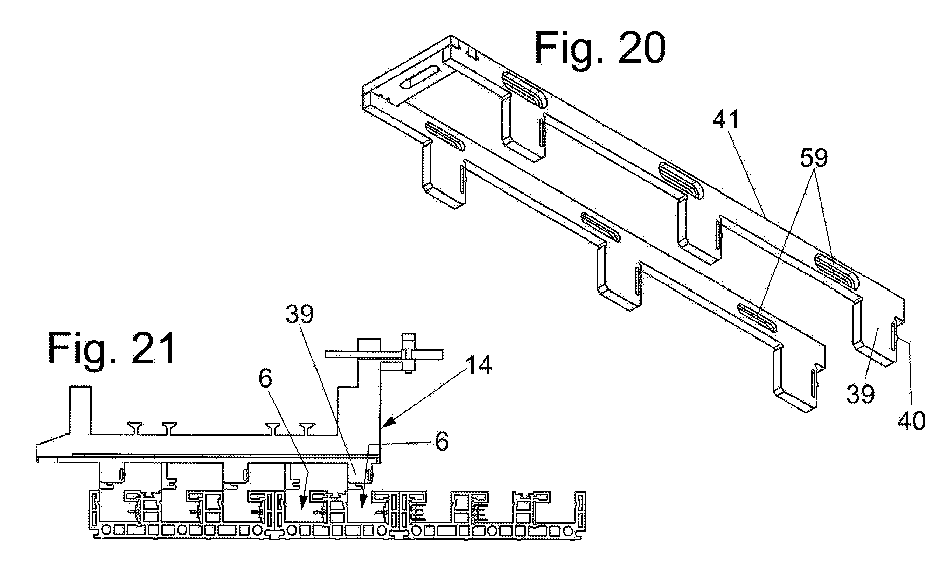

Das rein mechanische Befestigen bzw. Vorbefestigen jeder elektrischen Komponente bzw. jeden des elektrischen Gerätes auf den Montagebasisprofilen erfolgt daher einfach durch Aufsetzen des Komponentensockels 35 senkrecht oben auf die Montagebasis (siehe das Zusammenspiele der Figuren 21 und 22) beim Einführen der Rastfüße 39 in die Aufnahmekonturen. Das Lösen erfolgt durch Abziehen senkrecht nach oben.

In dem vormontierten Montagezustand der Fig. 22 werden die Stromschienen bzw. leitenden Abschnitte der Busleisten 13, 14 noch nicht kontaktiert.

Derart wird in einfacher Weise eine durch senkrechtes Aufsetzen von oben realisierbare mechanische Verbindung zwischen den Montagebasisprofilen 6 und den aufzurastenden elektrischen Geräten realisiert, bei der aber noch keine Kontaktierung erfolgt.

Selbstverständlich sind Varianten denkbar, so könnte die Rastkante 8 oder die Rastkante 10 in der Aufnahmekontur auch etwas vorstehend ausgestaltet sein und anstelle eines Vorsprungs könnte eine kleine Nut in den Rastfüßen vorgesehen sein. Derart ergäbe sich quasi eine Art umgekehrte Rastanordnung zu dem Ausführungsbeispiel der Figur 20 und 21.

Elektrische Geräte wie z.B. Reihenklemmen, die keine elektrische Verbindung zu einer Busleiste aufweisen, können nur mit Rastfüßen 39 versehen werden, um sie in einfacher Weise an den Montagebasisprofilen 1 zu befestigen.

In weiter bevorzugter Ausgestaltung ist aber vorgesehen, dass die Komponentensockel 35 aus einem nach der Montage in den Aufnahmekonturen 6 ggf. nur noch in Anreihrichtung X verschiebbaren bzw. beweglichen Sockelabschnitt 41 und einem relativ dazu beweglichen Kontaktierungsabschnitt 42 bestehen.

Dies ist beispielsweise dadurch realisierbar, dass der Sockelabschnitt 41, der dann bevorzugt die Rastfüße 39 aufweist, als z.B. U-förmiger Sockelrahmen ausgebildet ist, der einen schlittenartigen Kontaktierungsabschnitt 42 einfasst, der in dem Sockelrahmen 41 senkrecht zur Anreihrichtung X verschieblich geführt ist. Dabei greifen Zapfen 58 an dem Kontaktierungsabschnitt in Langlöcher 59 in dem Sockelrahmen ein.

Varianten dieser Ausgestaltung sind denkbar.

Der Kontaktierungsabschnitt 42 weist vorzugsweise Gehäuseabschnitte 43 auf, die vorzugsweise abschnittsweise buchsenartige Kontakte (hier nicht im Einzelnen dargestellt) umgeben.

Alternativ kann auch vorgesehen sein, direkt buchsenartige Kontakte an den Kontaktierungsabschnitt 42 anzusetzen oder anzuformen, die in hier nicht dargestellter Weise mit Stromschienen und/oder einer Elektronikschaltung der elektrischen Geräte verbunden sind.

Wesentlich ist, dass die tulpenförmigen Kontakte bzw. buchsenförmigen Kontakte, ggf. umgeben von den Gehäuseabschnitten 43, derart ausgerichtet und ausgestaltet sind, dass durch ein Relativverschieben des Kontaktierungsabschnittes 42 relativ zum Sockel 41 bzw. zum Sockelrahmenabschnitt 41 ein Kontaktieren der Stromschiene der Busabschnitte möglich ist.
Es ist somit möglich, wie in Figur 21 bis 23 dargestellt, zunächst ein zu montierendes elektrisches Gerät senkrecht von oben an der Montagebasis vor zu verrasten (siehe Figur 22) und dann durch Verschieben des Kontaktierungsabschnittes bzw. durch Bewegen des Kontaktierungsabschnittes in Richtung in Richtung Y Stromschienen 16, 17 der Busleiterabschnitte bzw. Busleisten 13, 14 zu kontaktieren.

Derart werden das eigentliche Aufrasten und das Kontaktieren funktional sauber voneinander getrennt.

Die eigentliche Bewegung des Kontaktierungsabschnittes 42 relativ zum Sockelabschnitt 41 kann auf an sich verschiedene Weise gelöst werden. Sie kann mittels verschieden ausgestalteter Mechaniken (z.B. einer Exzentermechanik, einer Hebelmechanik, einer Getriebemechanik oder dgl.) erfolgen oder aber direkt manuell von Hand. Denkbar wäre theoretisch auch eine motorische Betätigung.

Es ist in bevorzugter, aber beispielhafter, Ausgestaltung vorgesehen, eine Exzenterstiftanordnung 44 zu nutzen, wobei ein exzentrisch angeordneter Axialstift 45 an einem Exzenterrad 46 in ein Langloch 47 eingreift, und wobei das Exzenterrad 46 vorzugsweise derart ausgestaltet ist, dass es in Draufsicht auf die Montagebasisprofile mit den Montagekonturen 6 von oben mit Werkzeug wie einem Schraubenschlüssel oder einem Schraubendreher betätigbar ist. Es kann auch ein Spezialwerkzeug vorgesehen sein, z.B. ein Mehrkantschlüssel mit einer speziellen Kontur, der in eine entsprechende Kontur im Exzenterrad greift, um Fehlbetätigungen zu erschweren.

So ist es möglich ist, durch eine kleine Drehung den Kontaktierungsabschnitt 42, der mit dem Langloch verbunden ist, relativ zum Sockelabschnitt 41 mit dem Exzenterrad in die Kontaktierungsstellung der Figur 23 hinein und -falls gewünscht - wieder dieser heraus zu bewegen.

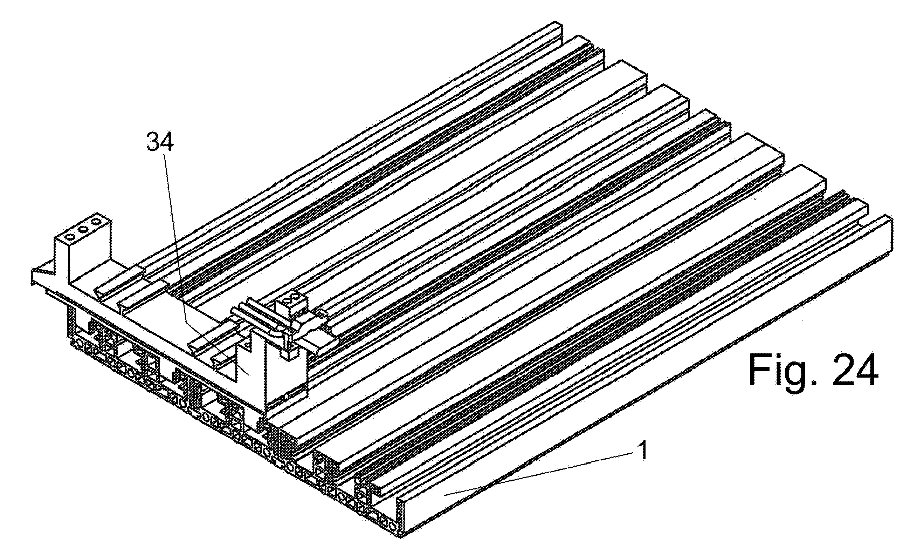

Figur 24 veranschaulicht, wie der Gerätesockel in montierter Stellung an einer Montagebasis angeordnet ist.

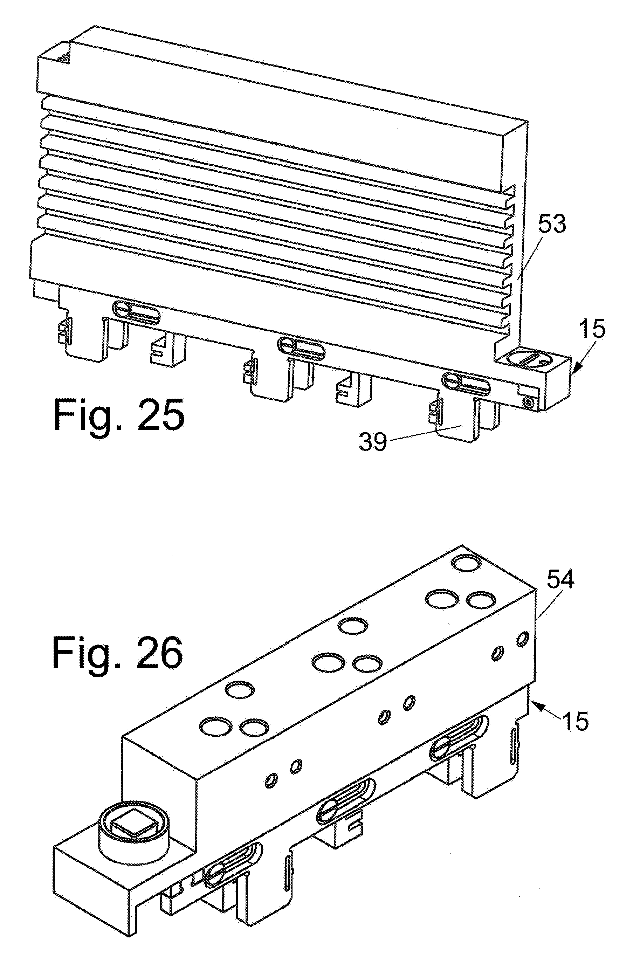

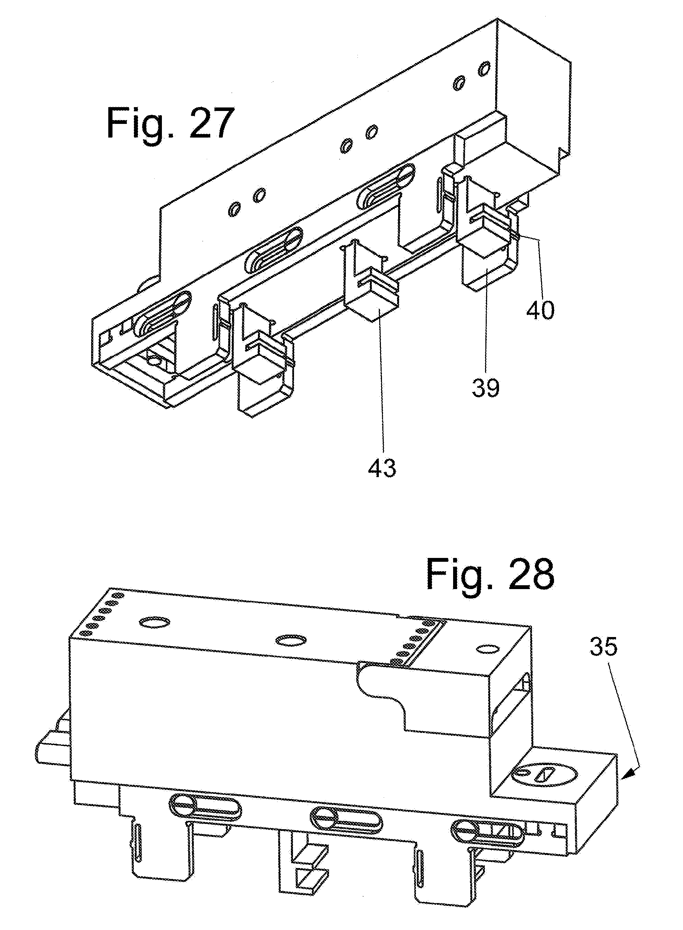

Die Figuren 25, 26, 27, 28 zeigen verschiedene Geräte und/oder verschiedene Ansichten von Geräten, die sich zur Montage an den Montagebasisprofilen beispielhaft eignen.

Zu erkennen ist, dass diese Geräte jeweils einen Komponentensockel 35 aufweisen, der wenigstens einen der Rastfüße 39 aufweist.

Vorzugsweise sind hier entweder vier oder sechs der Rastfüße 39 an jedem elektrischen Gerät vorgesehen.

Die elektrischen Geräte können beispielsweise in ihrem Zusammenspiel Motorstarterkombinationen ausbilden oder aber Geräte beliebig anderer Funktionalität, wobei auch vorgesehen sein kann, dass beispielsweise über die Kontaktierungsabschnitte 42 miteinander zu verbindende elektrische Kontakte in zu den Montagekonturen senkrechter Richtung miteinander verbunden werden.

Die montierenden elektrischen Geräte können z.B. Signalmodule sein, Energiemodule, SSR-Module, Einspeisemodule usw. Prinzipiell ist die Eignung der Montagebasis für elektrische Geräte verschiedenster Art gegeben.

Wesentlich ist, dass die elektrischen Geräte, die zu montieren sind, entweder jeweils selbst einen Komponentensockel 35 aufweisen, der über die Rastfüße 39 verfügt oder aber dass sie jeweils über eine mechanische Schnittstelle zu einem derartigen Komponentensockel verfügen. Es ist beispielsweise denkbar, dass an einem Komponentensockel 35 an der von der Montagebasis abgewandten Seite Rastelemente vorgesehen sind, die es ermöglichen, Elektronikgehäuse o.dgl. auf die Komponentensockel aufzurasten.

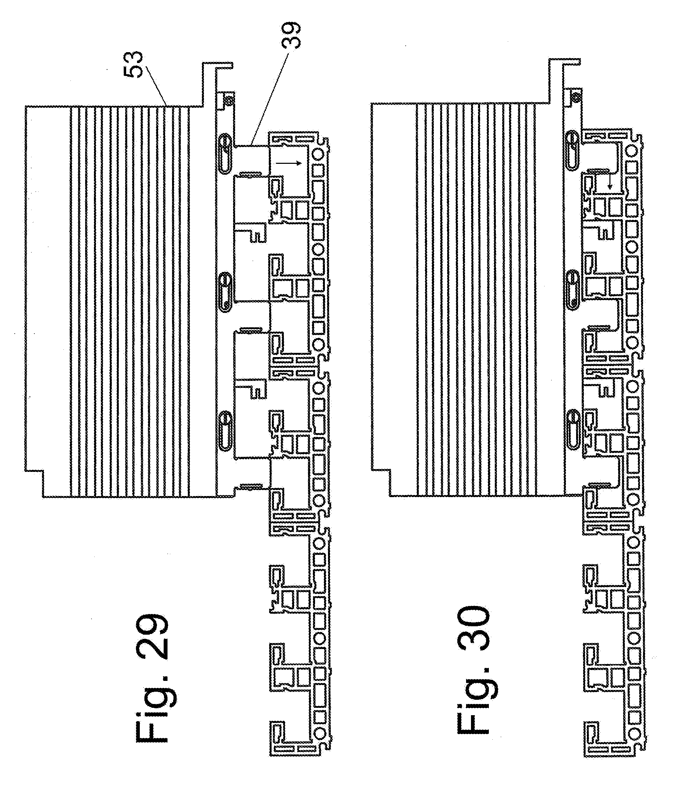

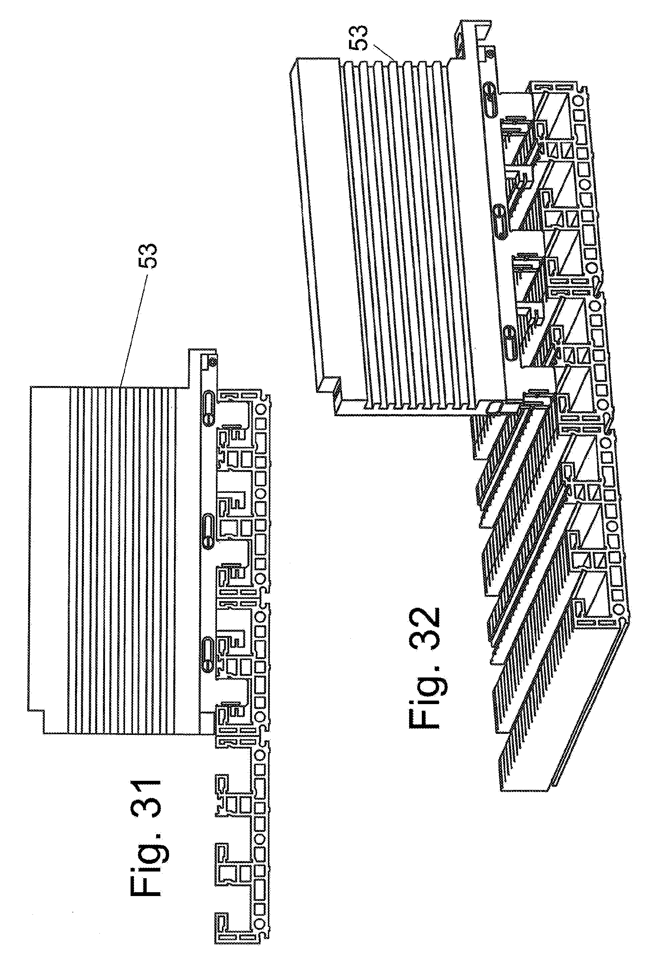

Die Figuren 29, 30 und 31 zeigen beispielhaft das Aufrasten und anschließende Verbringen in die Kontaktstellung anhand eines weiteren elektrischen Gerätes, dass als SSR-Modul 53 ausgestaltet ist.

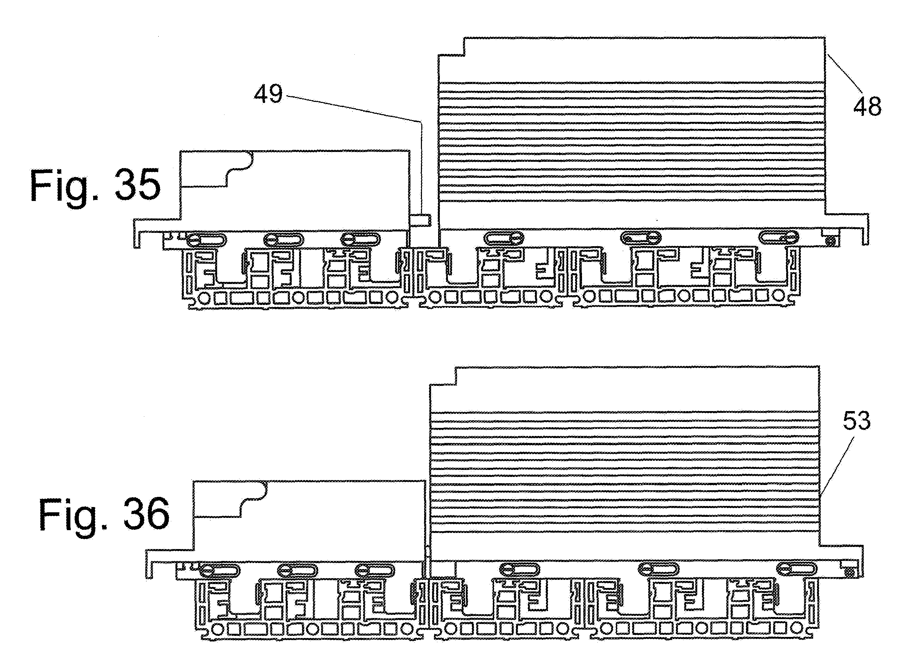

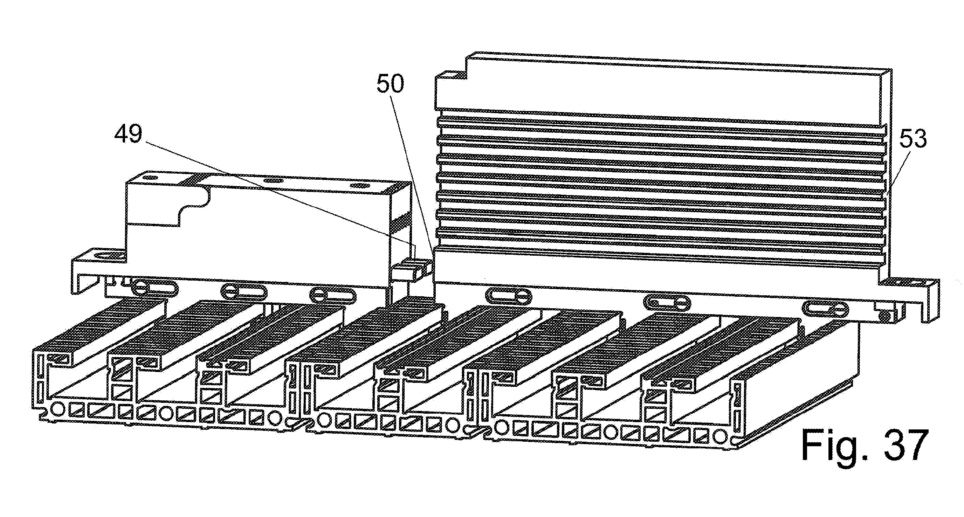

Figur 35 veranschaulicht, dass es beim Herstellen der Kontaktstellung dann, wenn das eigentliche Gehäuse 48 des elektrischen Gerätes mit dem Kontaktierungsabschnitt 42 fest verbunden ist und sich quasi mit diesem beim Verbringen in die Kontaktstellung mit bewegt, möglich ist, die Kontakte 49, 50 zwischen benachbarten elektrischen Geräten (senkrecht zur Anreihrichtung) miteinander zu verbinden (siehe Figur 36, 37 oder 38).

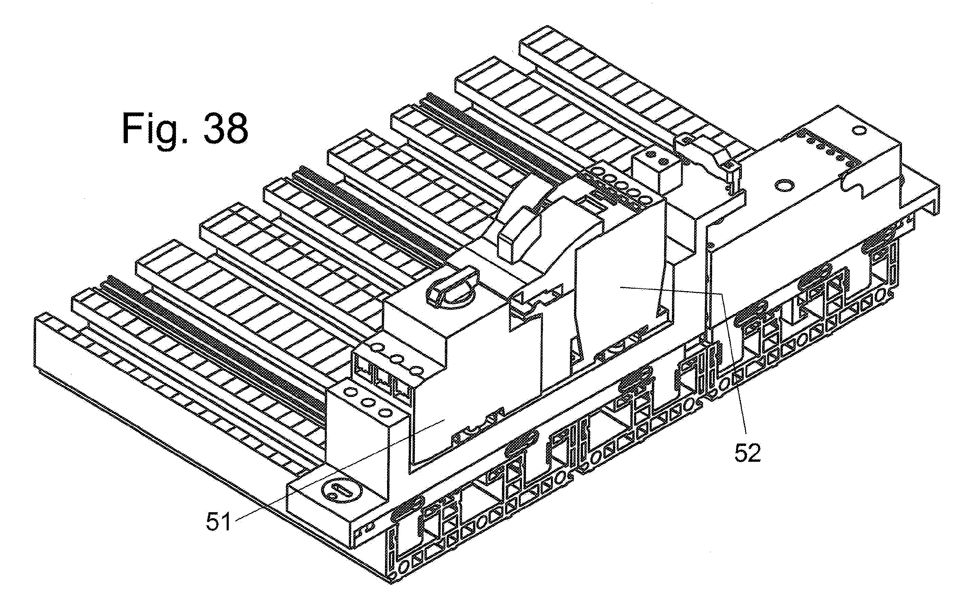

Figur 38 veranschaulicht auch, dass auf dem Komponentensockel 35 elektrische Geräte 51, 52 montiert sind.

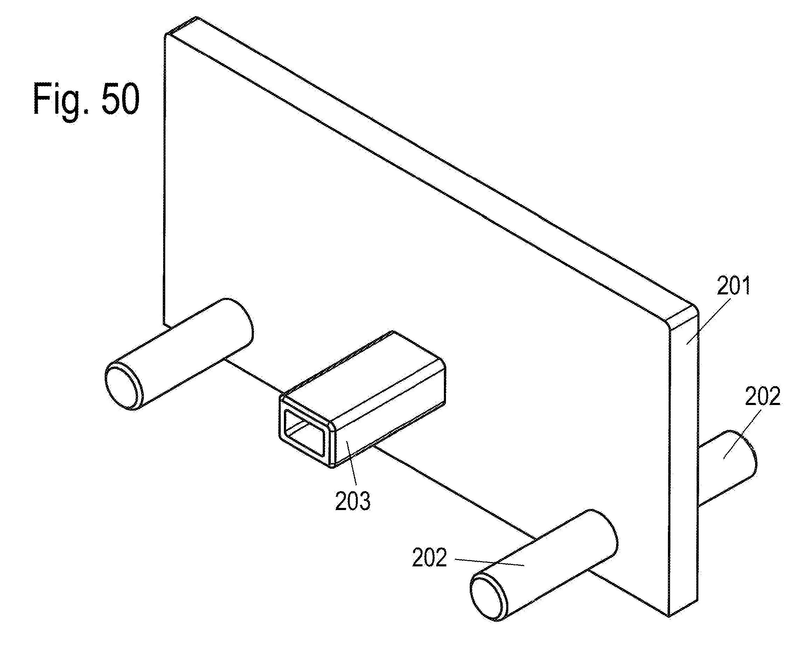

Eine Seitenansicht einer derartigen Anordnung zeigt Figur 50.

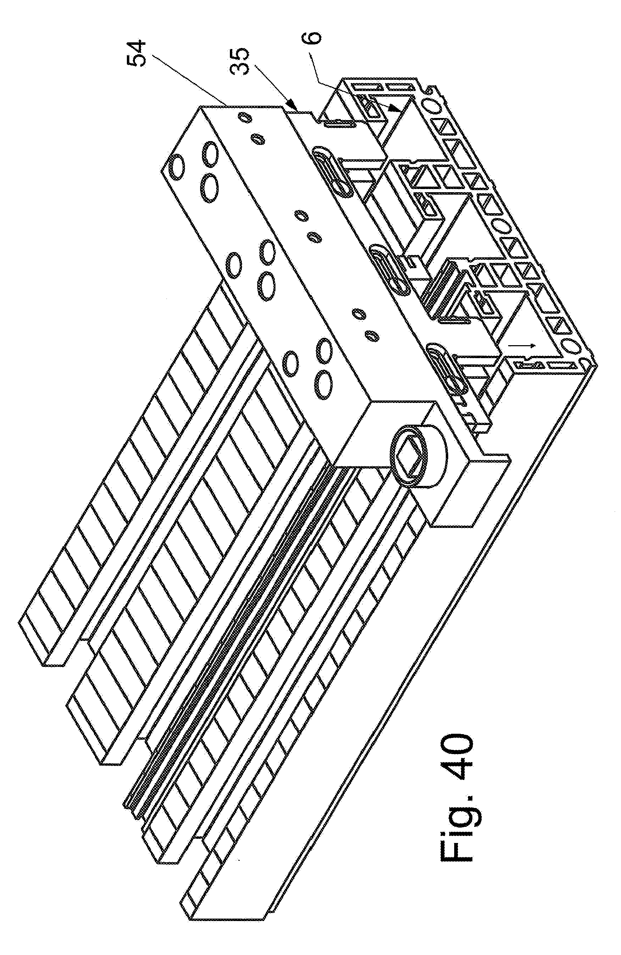

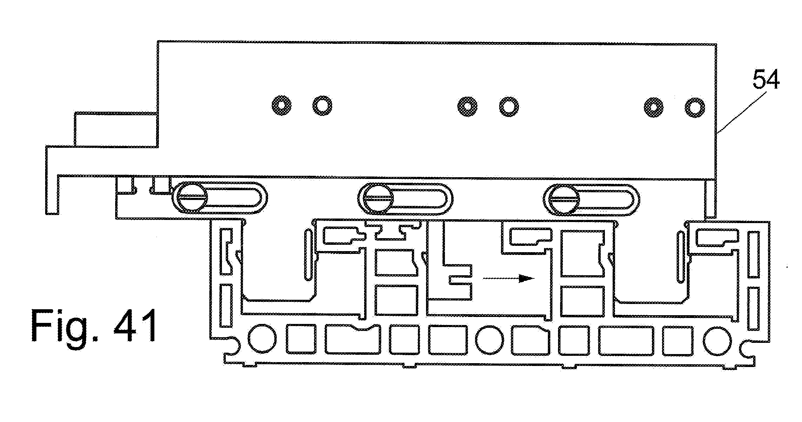

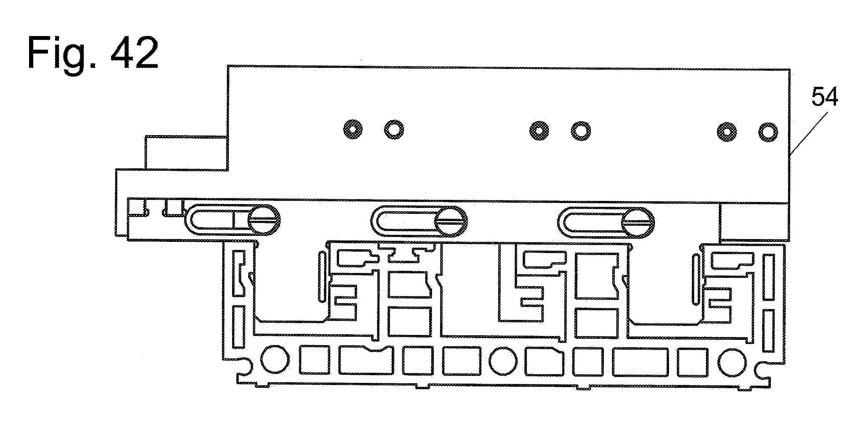

Figur 40 bis 42 veranschaulichen die Montage eines weiteren elektrischen Gerätes.

Figur 43 zeigt eine perspektivische Ansicht einer Mehrzahl von Montageprofilen in der zusammengesetzten Montagebasis, auf der eine Vielzahl von elektrischen Geräten montiert ist. Bestechend ist die sofort überschaubare Anordnung der Geräte an der Montagebasis.

Es kann vorgesehen sein, seitlich ein Abschlussprofil 55 vorzusehen, um die Anordnung seitlich zu begrenzen.

Da in X-Richtung eine Verschieblichkeit der elektrischen Komponenten gegeben ist, kann es nach einer vorteilhaften Weiterbildung vorgesehen sein, dass an der Montagebasis, insbesondere an den Montageprofilen z.B. im Bereich Wandungen Markierungen in einem Rastermaß in X-Richtung beabstandet vorgesehen sind, um das Anordnen der elektrischen Geräte auf den Montageprofilen zu erleichtern.

Es ist auch denkbar, die Aufnahmekontur abschnittsweise mit einer Metallisierung zu versehen, um derart eine Abschirmung zur bilden und/oder ggf. isolierte Leitungen in der Aufnahmekontur zu verlegen.

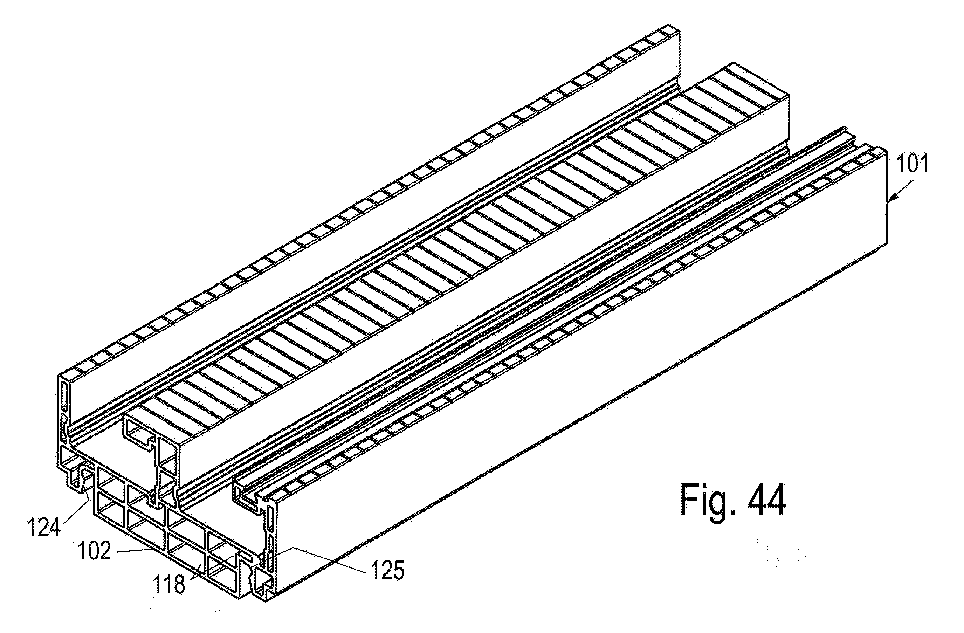

Fig. 44 zeigt eine alternative, weiterentwickelte Ausgestaltung eines Montagebasisprofils 101.

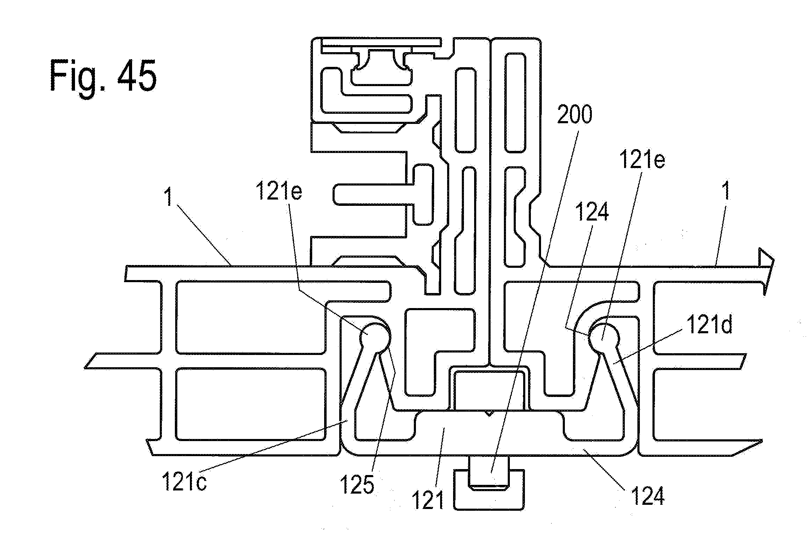

Von dem Montagebasisprofil 1 der Fig. 1 unterscheidet sich dieses Montagebasisprofil einerseits durch einen veränderten Grundabschnitt 102, der mit hier zwei übereinander liegenden Reihen von Hohlkanälen 118 versehen ist und andererseits durch veränderte Montagenuten 124, 125 (siehe auch Fig. 45).

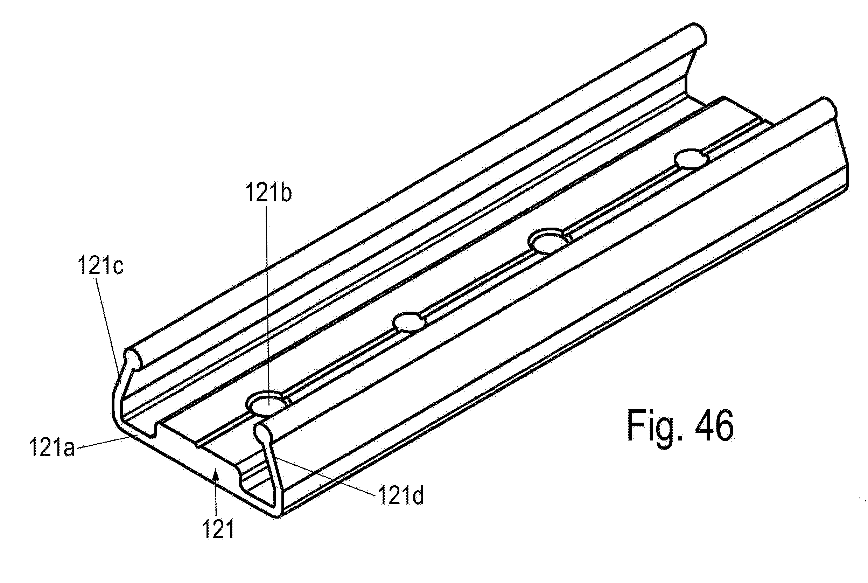

Das Verbinden von zwei benachbarten Montagebasisprofilen 101 erfolgt hier mit Hilfe von Verbindungselementen 121, die vorzugsweise als beliebig aus Meterware ablängbare, klammerartige Verbindungsschienen 121 ausgebildet sind, wie sie in Fig. 46 abgebildet sind. Die Verbindungsschienen 121 weisen im Querschnitt ähnlich zu den Verbindern der Fig. 11 eine U-Form auf, wobei ein Grundabschnitt 121a mit Durchgangslöchern 121b versehen sein kann, um die Verbindungsschienen beispielsweise mit einer Schraube 200 auf einer weiteren Platte wie einem Schaltschrank zu montieren. Alternativ können die Montagebasisprofile 101 auch selbst eine Schaltschrankwand bilden.

Vom Grundabschnitt 121a erstrecken sich zwei Längsschenkel 121c, 121d im Wesentlichen senkrecht nach oben, die an ihren freien Enden aufeinander zu gebogen sind und derart mit federnder Vorspannung in die Montagenuten 124, 125 benachbarter Montagebasisprofile 101 eingreifen. An den freien Enden der Längsschenkel 121c, d können Verdickungen 121e ausgebildet sein, welche die Montage erleichtern.

Die Verbindungsschienen 121 können sich über kurze Abschnitte oder aber die gesamte Länge der Montagebasisprofile 101 erstrecken, was diese besonders stabil und sicher miteinander verbindet oder aber über einen Teil der Länge der Montagebasisprofile 101. Es sei insofern auf die Ausführungen zu Fig. 11 verwiesen.

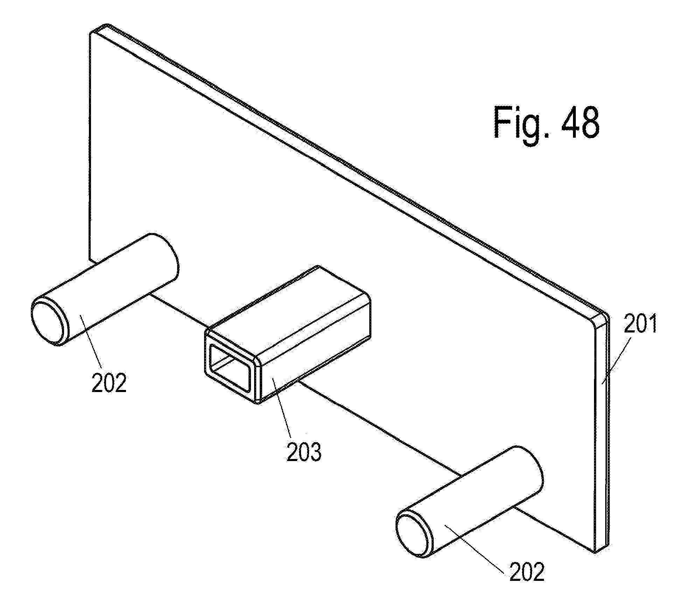

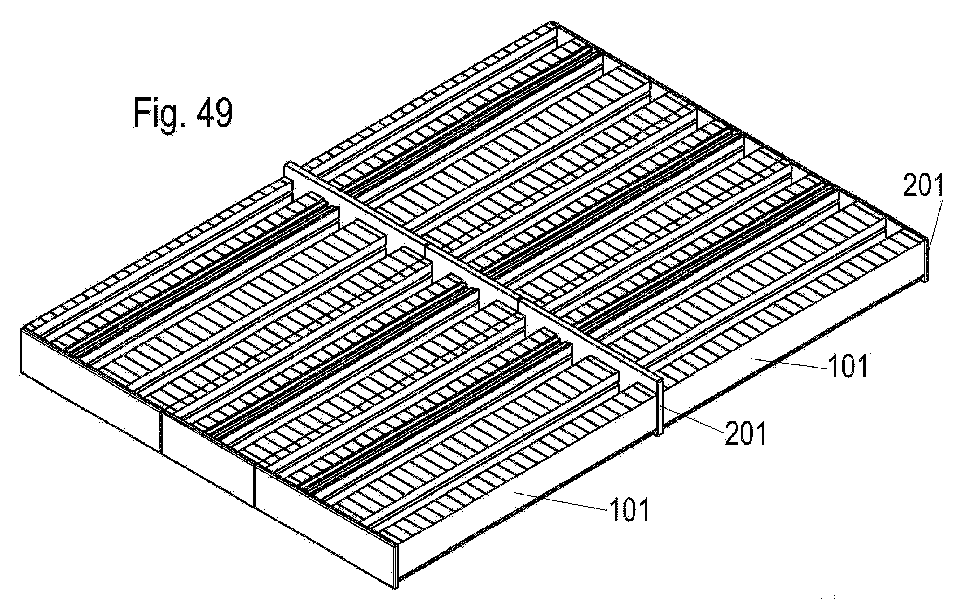

Fig. 48 zeigt als Seitenabschlussprofile ausgebildete Seitenleisten 201, von denen senkrecht Stege 202, 203 abstehen, deren Kontur an die Konturen von einzelnen der Hohlkammern 118 angepasst ist. Diese Seitenleisten 201 lassen sich seitlich an die Montagebasisprofile setzen, wobei die Stege 202, 203 in die Hohlkammern 118 eingreifen und sorgen für einen funktional sowie optisch vorteilhaften seitlichen Abschluss und Schutz der Montagebasisprofile 101 (Fig. 49).

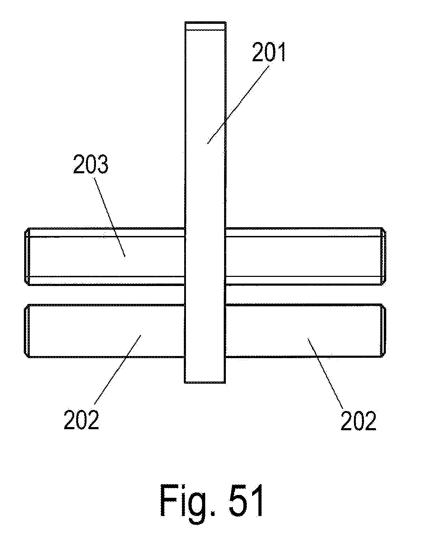

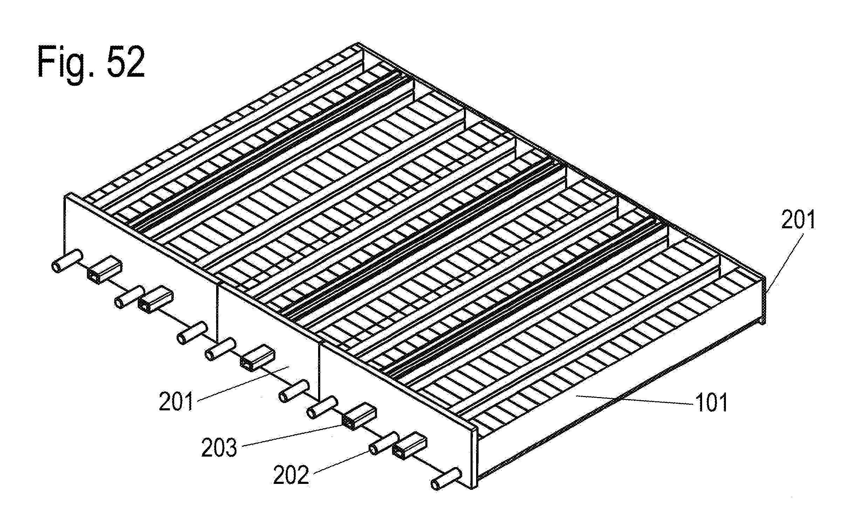

Es ist denkbar, die Seitenleisten 201 in verschiedener Ausgestaltung vorzusehen. Werden die Seitenleisten 201 beispielsweise auf ihren beiden voneinander abgewandten Seiten jeweils mit den Stegen 202, 203 versehen (Fig. 50, 51), können die Seitenleisten auch als eine Art von Zwischentrennwänden genutzt werden (siehe Fig. 49 und 52), um entweder größere Felder zu erzeugen oder aber optisch gut unterscheidbare Abschnitte einer Montagebasis. Dies ist beispielsweise auch sinnvoll, wenn Bereiche mit unterschiedlicher elektrischer/bustechnischer Funktion zu realisieren sind.

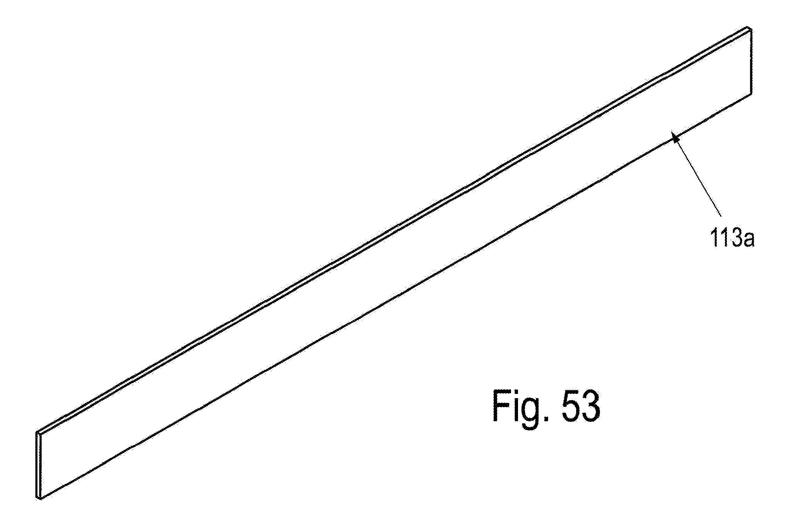

Die Fig. 53 bis 57 zeigen verschiedene Busleisten 113, wie sie beispielhaft im Rahmen der Erfindung nutzbar sind. Der Begriff der Busleiste ist dabei - wie bereits weiter oben erläutert - nicht zu eng zu fassen. Er umfasst einer einerseits elektrisch oder optisch Daten und Signale übertragende Datenbusleisten, aber auch solche Leisten, die entweder der Energieversorgung oder der Erdung der auf die Montagebasis aufzusetzenden Geräte und/oder der an diese Geräte anzuschließenden Feldgeräte (Aktoren, Sensoren, Initiatoren usw.) dienen. Er umfasst damit auch Stromschienen verschiedenster Art, so auch Erdungsschienen.

Die beiden einander gegenüberliegenden Montagekonturen 112, 112 erlauben in einfacher Weise jeweils das Einschieben eines Grundleistenabschnittes 115, der auch (Fig. 53) selbst einen Teil einer Stromschiene bilden kann.

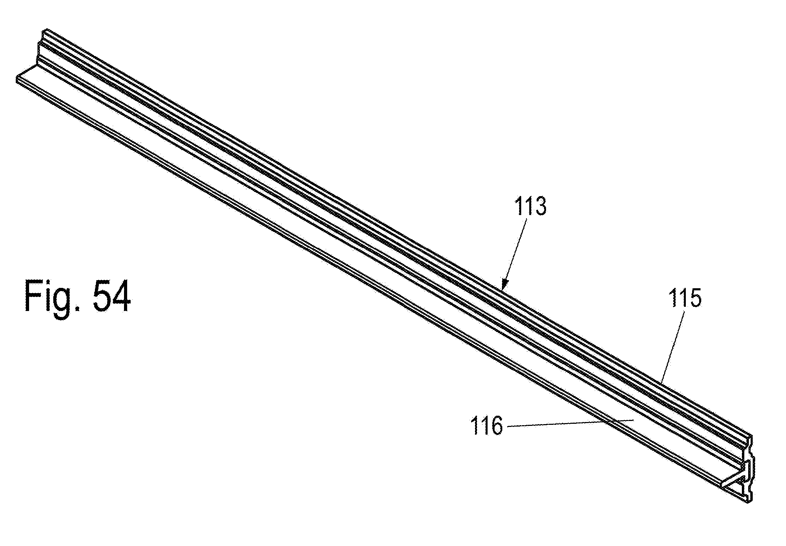

Der Grundleistenabschnitt 115 besteht nach Fig. 54 - 56 aus einem isolierenden Kunststoff. Es ist aber auch denkbar, den Grundleistenabschnitt aus Metall zu fertigen bzw. die Busleisten über als einstückige Metallseite auszubilden (Fig. 53, Bezugszeichen 113a), so dass diese Busleiste 113a beispielsweise als PE-Schiene nutzbar ist.

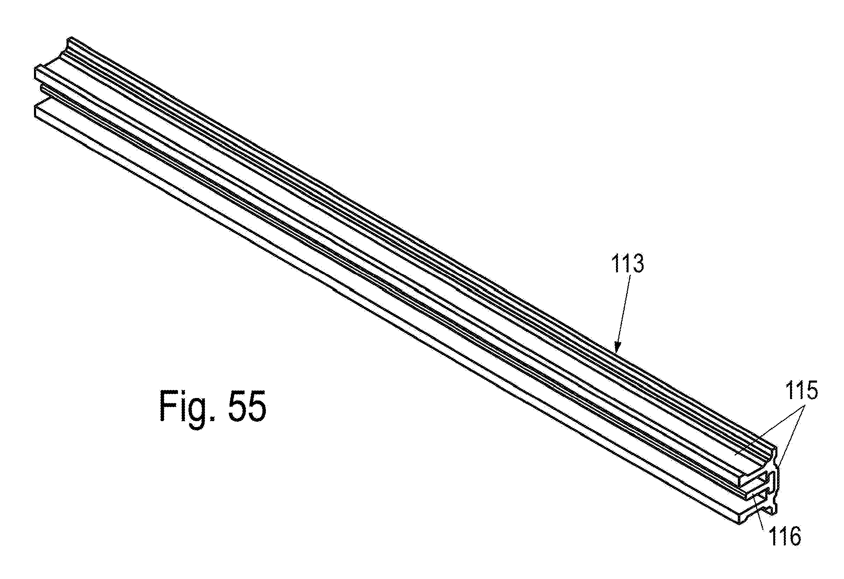

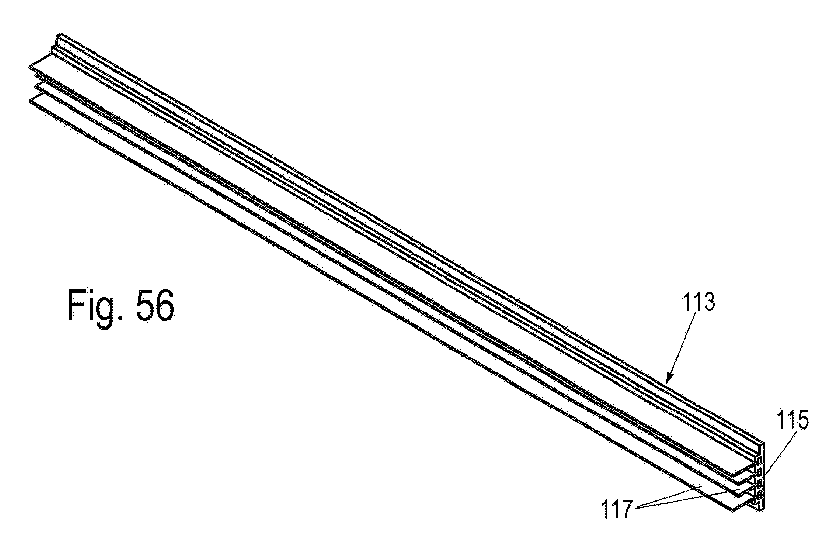

Wird der Grundleistenabschnitt 115 dagegen aus einem Isolierstoff gefertigt kann er mit einer Stromschiene 116 (Fig. 54, Fig. 55) oder mehreren Stromschienen 117 (Fig. 56) versehen werden.

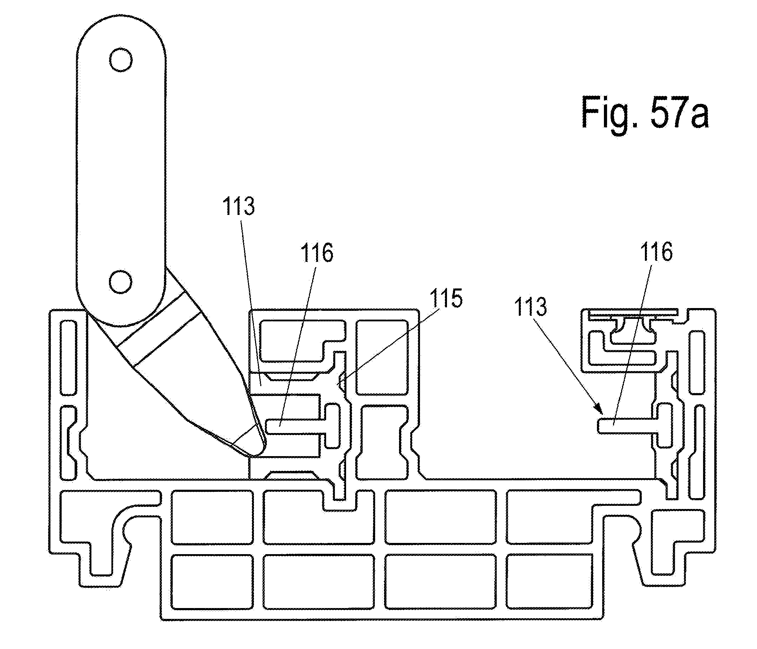

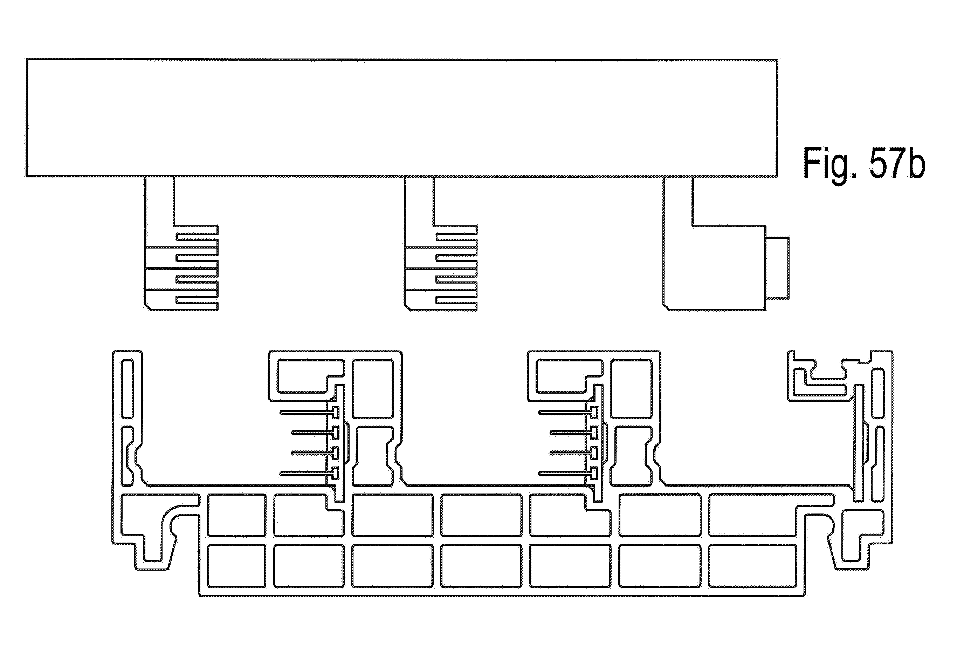

Nach Fig. 55 ist der Grundleistenabschnitt selbst U-förmig ausgestaltet, wobei im Innenraum de U die Stromschiene 116 verläuft. Die im Innenraum des U verlaufende Stromschiene 116 kann derart einfach fingersicher untergebracht werden (vergleiche Fig. 57) und beispielsweise zur Verteilung/zum Anschluss einer höheren Spannung dienen.

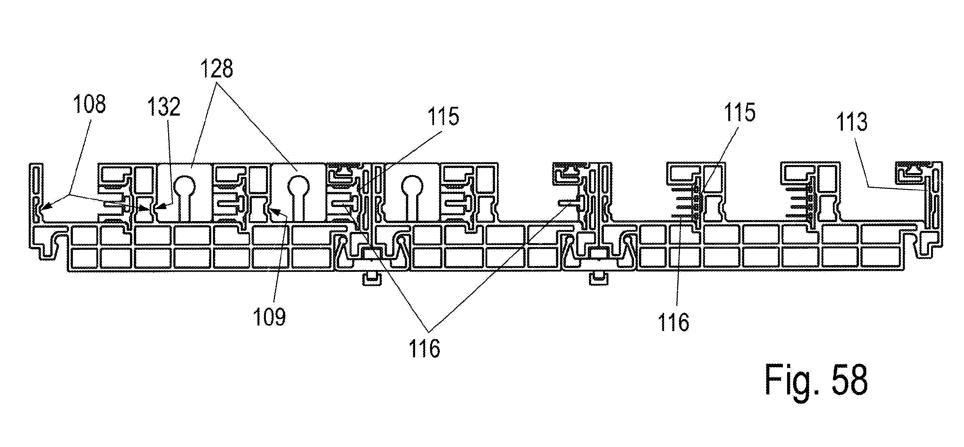

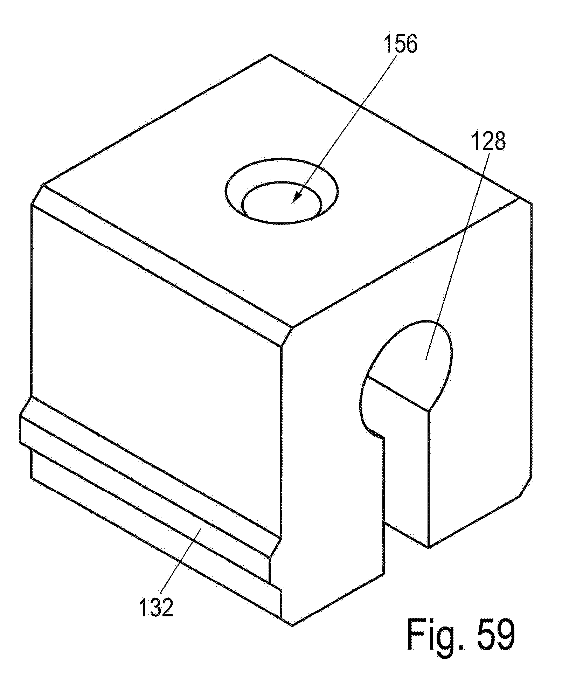

Die Figuren 58 und 59 offenbaren auch eine alternative Ausgestaltung der Rastelemente 128 zur Verrastung an den Montagebasisprofilen.

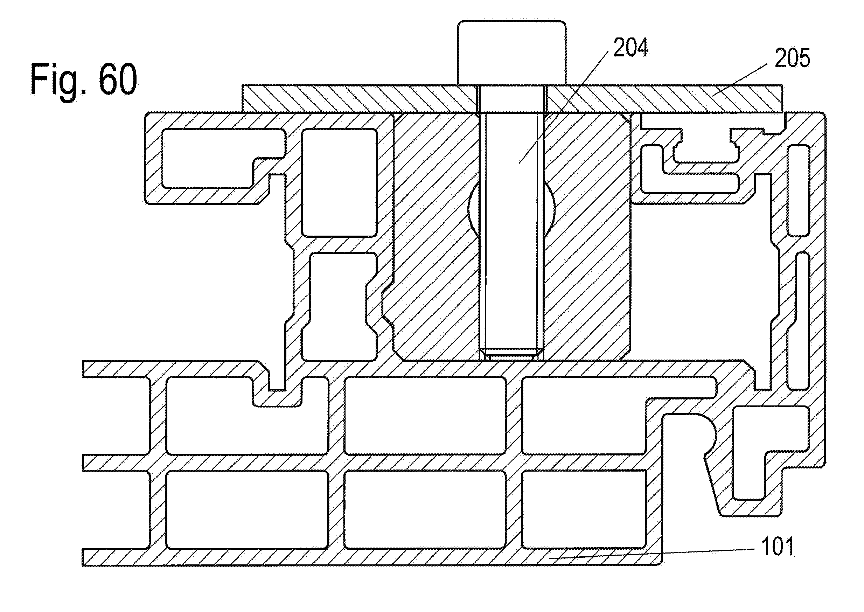

Die Rastelemente 128 weisen danach eine Rastkante 132 auf, die eine seitliche Rastkante 108 (gebildet durch eine Wand einer Nut 109) hintergreifen, die etwas tiefer in der Aufnahmekontur 106 des Montagebasisprofils 101 ausgebildet ist als die Rastkante 8 des Montagebasisprofils 1 der Fig. 1 und 8. Die Rastelemente 128 können wiederum eine Bohrung 156 aufweisen, um auf ihnen vorzugsweise schraubend Geräte oder dgl. zu montieren. Die Bohrung 156 ist wiederum vorzugsweise derart aufgelegt, dass sich das U-förmige Rastelement/Montageelement beim Eindrehen der Schrauben 204 aufweitet, was das Rastelement 128 an den Montagebasisprofilen sicher verspannt. Auch das Rastelement/Montageelement 128 kann dazu genutzt sein, um beispielsweise eine obere Montageplatte 205 zu montieren (Fig. 60). Es ist zudem wiederum in einfacher Weise dazu nutzbar, in einer ersten Montageart elektrische Komponenten bzw. Geräte oder aber auch Profile, Wandabschnitte oder dgl. an der Montagebasis zu montieren.

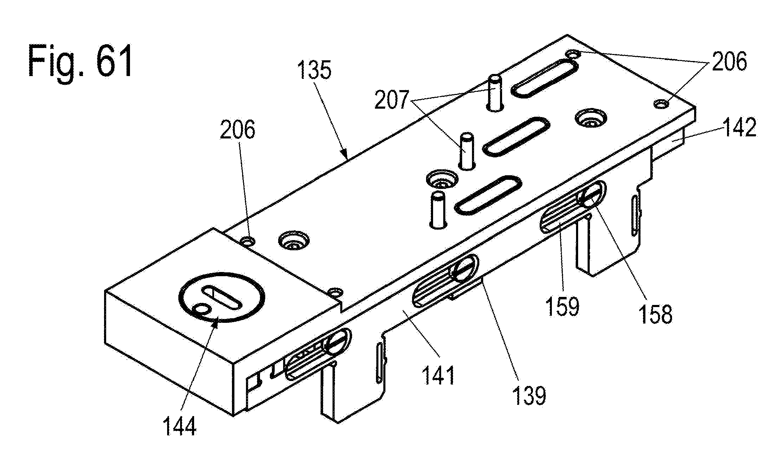

Nach Fig. 61 wird ein Komponentensockel 135 realisiert, der sich zum Aufsatz elektrischer Geräte und Funktionseinheiten verschiedenster Art eignet.

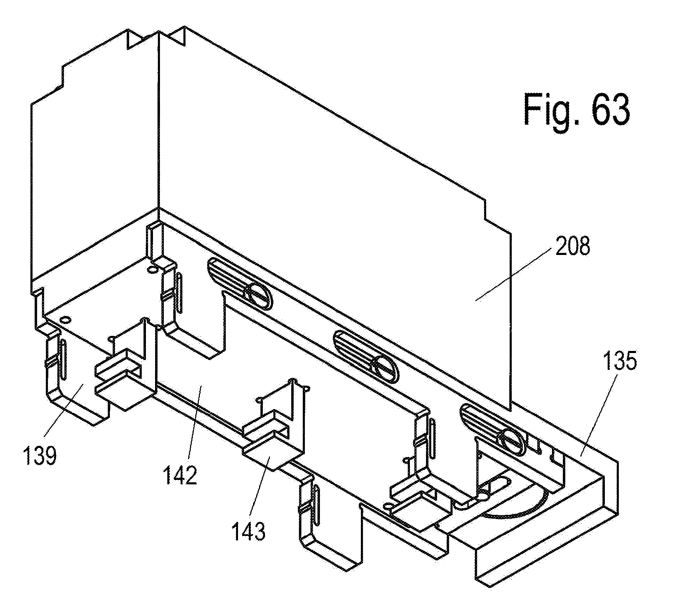

Auch dieser Komponentensockel 135 weist einen nach der Montage in den Aufnahmekonturen 6 ggf. nur noch in Anreihrichtung X verschiebbaren bzw. beweglichen Sockelabschnitt 141 und einen relativ dazu beweglichen Kontaktierungsabschnitt 142 auf. Der Sockelabschnitt 141, der wiederum die Rastfüße 139 aufweist (siehe z.B. Fig. 63), ist wiederum als U-förmiger Sockelrahmen ausgebildet, der einen schlittenartigen Kontaktierungsabschnitt 142 einfasst, der in dem Sockelrahmen 141 senkrecht zur Anreihrichtung verschieblich geführt ist. Es greifen auch wiederum Zapfen 158 an dem Kontaktierungsabschnitt in Langlöcher 159 in dem Sockelrahmen 141 ein.

Der Kontaktierungsabschnitt weist buchsenförmige Kontakte (hier nicht dargstellt), umgeben von Gehäuseabschnitten 143, derart ausgerichtet und ausgestaltet sind, dass durch ein Relativverschieben des Kontaktierungsabschnittes 142 relativ zum Sockel 141 bzw. zum Sockelrahmenabschnitt 41 ein Kontaktieren der Stromschiene der Busabschnitte möglich ist (Fig. 63).

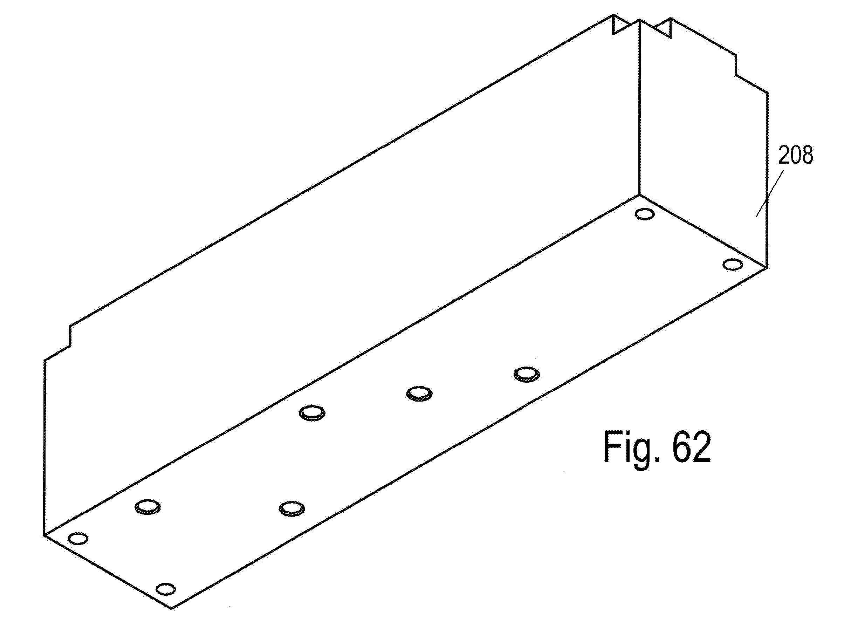

Der Kontaktierungsabschnitt 141 weist ferner an seiner von der Montagebasis abgewandten Außenseite Befestigungskonturen 206 wie Schraubbohrungen oder Rastkonturen und/oder Kontakte 207 auf, um Aufsatzelemente wie Elektronikgehäuse 208 (Fig. 62) auf dem Gerätesockel zu befestigen und zu kontaktieren. Die Kontakte 207 sind leitend mit den Kontakten verbunden, welche zur Kontaktieren der Stromschienen/Busschienen an den Kontaktierungsabschnitten dienen.

Auf den Komponentensockel können einerseits Elektronikgehäuse 208 nach Art der Fig. 62 zur Aufnahme verschiedenster Elektroniken aufgesetzt werden oder aber andere Funktionselemente verschiedenster Art.

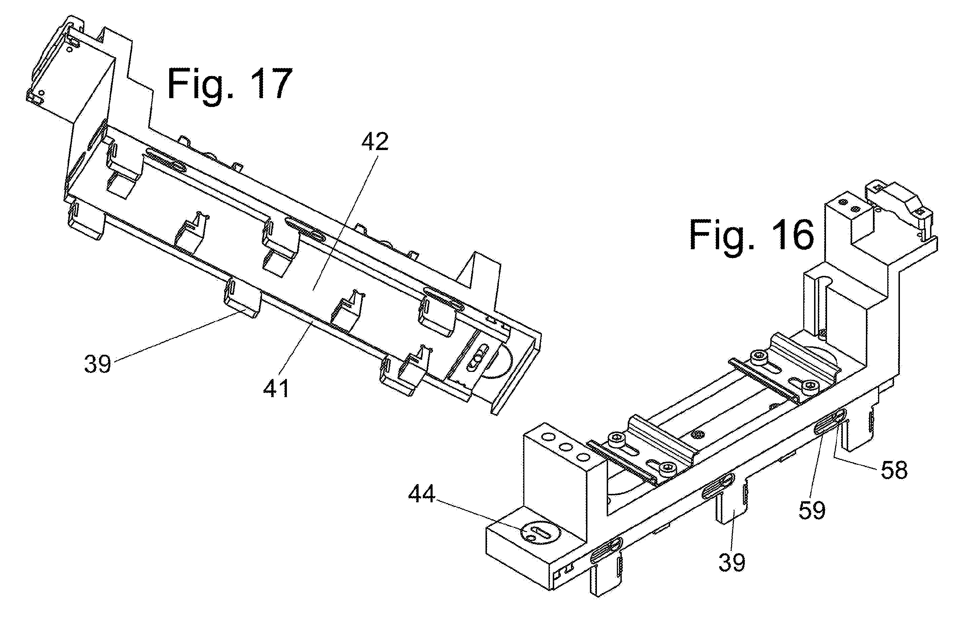

Die eigentliche Befestigungsmechanik ist wiederum als Exzenterstiftanordnung 144 nach Art oder funktional ähnlich zu Fig. 13 bis 16 ausgelegt.

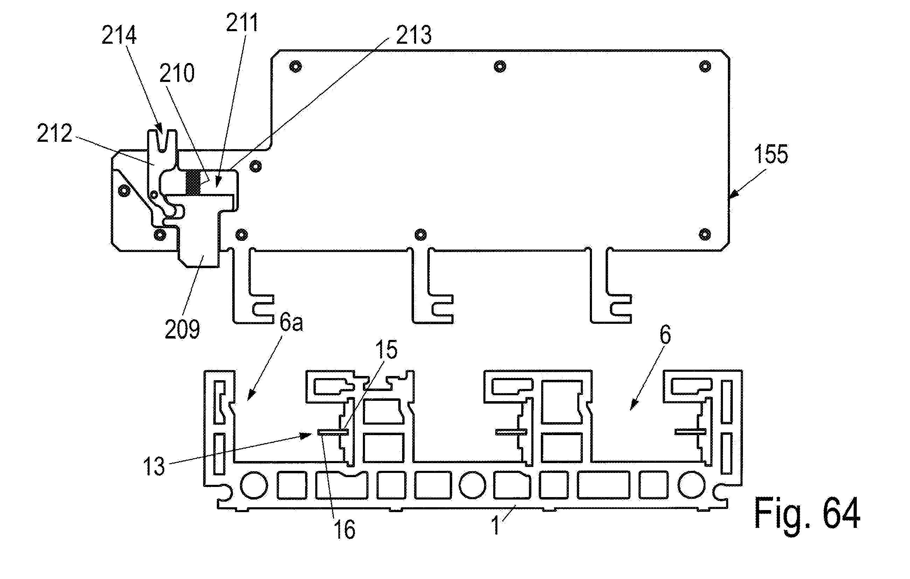

Fig. 64 zeigt ein weiteres auf eine Montagebasis aus Montagebasisprofilen 101 oder 1 aufrastbares elektrische Gerät 155 mit einem Gerätesockel, der hier wiederum dazu ausgelegt ist, senkrecht von oben (Fig. 64) auf ein Montagebasisprofil 1 bzw. auf eine aus Montagebasisprofilen 1 zusammengesetzte Montagebasis (Fig. aufgesetzt zu werden , wobei sodann durch seitliches Verschieben senkrecht zur Anreihrichtung mittels Kontaktelementen (bei 143) wiederum eine Busleiste kontaktiert wird.

Dabei ist der Gerätesockel bzw. das Gerätegehäuse in einer konstruktiv und funktional vorteilhaften Art mit einem beweglichen Riegel versehen, der einen Riegelabschnitt 209 aufweist, der sich über eine Feder 210 am Gehäuse 213 oder einem Gerätesockel abstützt. Der Riegelabschnitt 208 und die auf ihn wirkende Feder 210 sind derart bemessen und ausgelegt, der Riegelabschnitt beim Aufsetzten des Gerätes 155 aus einer aus dem Gehäuse 213 vorstehenden Position (Fig. 64) zunächst in einen Freiraum 211 im Gerät 155 eingeschoben wird (Fig. 55). In dieser Position (Fig. 55) liegt der Riegelabschnitt 209 auf dem Gehäuse 155 federvorgespannt auf.

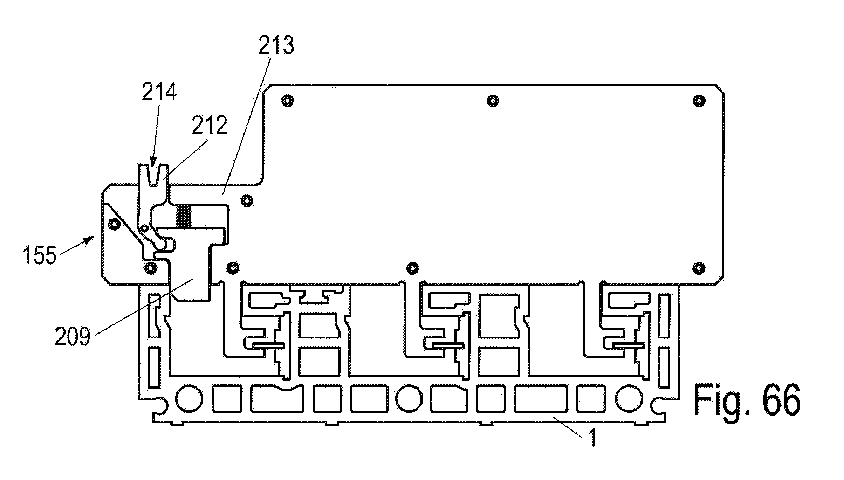

Wird jetzt das Gehäuse 213 als Ganzes seitlich in die Position der Fig. 66 verschoben, in welcher die Busleiste 13 kontaktiert wird, gelangt der Riegel in eine mit dem Grundschenkel 6a fluchtende Position, so dass sich die Feder entspannen und den Riegel in den durch den Grundschenkel 6a definierten Freiraum ausfahren kann (Fig. 66). Hierdurch ist das Gehäuse 213 in seiner die Busleiste kontaktierenden Stellung verriegelt.

Um das Gehäuse aus der Kontaktierungsstellung der Fig. 66 zu lösen, ist es notwendig, den Riegelabschnitt 209 gegen die Wirkung der Feder aus dem Grundschenkel 6a herauszubewegen.

Dies kann auf verschiedenste Weise realisiert werden, beispielweise durch ein Löseelement 212 in Form eines mit dem Riegelabschnitt gekoppelten Drehhebels 212, der einen Ansatzkontur 214 für ein Betätigungswerkzeug wie einen Schraubendreher aufweist, wobei der Drehhebel 212 derart mit dem Riegelabschnitt gekoppelt ist bzw. zusammenwirkt, dass es möglich ist, das Betätigungswerkzeug in der Kontaktierungsstellung der Fig. 66 an das Gehäuse 213 anzusetzen und den Riegelabschnitt 209 aus dem Grundschenkel 6a zu hebeln, um das Gehäuse senkrecht zur Anreihrichtung aus seiner Kontaktierungsstellung heraus zu bewegen und ggf. von der Montagebasis abzunehmen.

### Bezugszeichen

- Montagebasisprofil: 1
- Grundabschnitt: 2
- Wandabschnitte: 3, 4, 5
- Grundschenkel: 3a
- Querschenkel: 3b
- Aufnahmekontur: 6
- Grundschenkel: 6a, 6b
- Aufsteckkonturen: 7
- Rastkante: 8
- Nut: 9
- Rastkante: 10
- Schraube: 11
- Montagekontur: 12
- Busleisten: 13, 14
- Grundleistenabschnitt: 15
- Stromschienen: 16, 17
- Hohlkanäle: 18, 19, 20
- Verbindungselementen: 21, 22
- Montagenuten: 24, 25
- Plattenabschnitt: 26
- Verbreiterungen: 27
- Rastelement: 28
- Auflageabschnitt: 29
- Rastfüße: 30, 31
- Rastkanten: 32, 33
- Gerätesockel: 34
- Komponentensockel: 35
- Gerätesockelabschnitt: 36
- Tragschienenabschnitte: 37, 38
- Rastfuß: 39
- Vorsprung: 40
- Sockelabschnitt: 41
- Kontaktierungsabschnitt: 42
- Gehäuseabschnitt: 43
- Exzenterstiftanordnung: 44
- Stift: 45
- Exzenterrad: 46
- Langloch: 47
- Gehäuse: 48
- Kontakte: 49, 50
- elektrische Geräte: 51, 52, 53, 54
- Abschlussprofil: 55
- Schraubbohrung: 56
- Wandabschnitt: 57
- Zapfen: 58
- Langlöcher: 59
- Montagebasisprofil: 101
- Grundabschnitt: 102
- Busleiste: 113
- Grundleistenabschnitt: 115
- Stromschiene: 116
- Stromschienen: 117
- Hohlkanäle: 118
- Hohlkanäle: 118
- Verbindungselementen: 121
- Grundabschnitt: 121 a
- Durchgangslöcher: 121b
- Längsschenkel: 121c, d
- Verdickungen: 121e
- Montagenuten: 124, 125
- Rastelemente: 128
- Rastkante: 132
- Gehäuse: 155
- Bohrung: 156
- Zapfen: 158
- Langlöcher: 159
- Schraube: 200
- Seitenleisten: 201
- Stege: 202, 203
- Schraube: 204
- Montageplatte: 205
- Befestigungskonturen: 206
- Kontakte: 207
- Riegel: 208
- Riegelabschnitt: 209
- Feder: 210
- Freiraum: 211
- Gerät: 155
- Löseelement: 212
- Gehäuse: 214
- Ansatzkontur: 215

## Patentansprüche

1. Montagesystem zur Montage elektrischer und/oder mechanischer Komponenten an einer Montagebasis, die wenigstens ein Montagebasisprofil (1) bzw. wenigstens einen Montagebasiskörper aufweist, **dadurch gekennzeichnet, dass** an der Montagebasis, insbesondere an den Montagebasisprofilen, wenigstens eine Aufnahmekontur (6) ausgebildet ist, und dass das wenigstens eine Montagebasisprofil dazu ausgelegt ist, mit wenigstens einem weiteren oder mehreren weiteren aneinander reihbaren Montagebasisprofilen zu der übergreifenden Montagebasis zusammengesetzt zu werden, in der eine oder vorzugsweise mehrere der Aufnahmekonturen (6) in vorzugsweise zueinander paralleler Anordnung ausgebildet sind.

2. Montagesystem zur Montage elektrischer und/oder mechanischer Komponenten an einer Montagebasis, insbesondere nach Anspruch 1, **dadurch gekennzeichnet, dass** die Montagebasis mehrere direkt aneinander gesetzte und miteinander verbundene Montagebasisprofile (1) aufweist.

3. Montagesystem nach einem der vorstehenden Ansprüche, **dadurch gekennzeichnet, dass** die Montagebasisprofile (6) derart ausgestaltet sind, dass sie einen Grundabschnitt (2) und einen von dem Grundabschnitt (2) vorstehenden Wandabschnitt (3, 4, 5) oder vorzugsweise mehrere von dem Grundabschnitt vorstehende Wandabschnitte (3, 4, 5) aufweisen, welche die wenigstens eine oder mehrere der Aufnahmekonturen (6) voneinander trennen.

4. Montagesystem nach einem der vorhergehenden Ansprüche, **dadurch gekennzeichnet, dass** die Grundabschnitte (2) als in X-Y-Ebene unterbrechungsfreie plattenförmige Abschnitte ausgebildet sind und dass die Grundabschnitte (2) in ihrem Zusammenspiel über mehrere der Montagebasisprofile (1) hinweg eine durchgängige Grundplatte ausbilden, die als Montagewand oder als Gerät zur Montage an eine Fläche oder aber als Schaltschrankwand nutzbar ist.

5. Montagesystem nach einem der vorstehenden Ansprüche, **dadurch gekennzeichnet, dass** die Aufnahmekonturen sich in einer Haupterstreckungsrichtung (X) parallel zueinander erstrecken.

6. Montagesystem nach einem der vorhergehenden Ansprüche, **dadurch gekennzeichnet, dass** die Aufnahmekonturen (6) in einem Querschnitt senkrecht zur Ebene der Grundabschnitte (2) eine L-Form oder eine T-Form oder eine 1-Form aufweisen und dass sich die L-förmigen oder T-förmigen oder I-förmigen Aufnahmekonturen in die Montagebasisprofile rillenartig hineinerstrecken.

7. Montagesystem nach einem der vorhergehenden Ansprüche, **dadurch gekennzeichnet, dass** die Aufnahmekonturen einen Grundschenkel (6a) und wenigstens einen sich dazu senkrecht erstreckenden Querschenkel (6b) aufweisen und dass in den Grundschenkeln (6a) wenigstens eine oder mehrere Rastkanten (8, 10) zur Verrastung oder Vorverrastung von Rastfüßen (39) an den elektrischen Geräten vorgesehen sind.

8. Montagesystem nach einem der vorhergehenden Ansprüche, **dadurch gekennzeichnet, dass** die Aufnahmekonturen (6) dazu ausgelegt sind, elektrisch leitende und/oder lichtleitende Kontakte aufzunehmen und/oder dass die Aufnahmekonturen (6) dazu ausgelegt sind, Busleisten (13,14) und/oder Stromschienen aufzunehmen.

9. Montagesystem nach einem der vorhergehenden Ansprüche, **dadurch gekennzeichnet, dass** die Aufnahmekonturen Montagekonturen (12) zum Aufnehmen der Busleisten (13, 14) aufweisen, welche als Nuten an den Querschenkeln (6b) der Aufnahmekonturen ausgelegt sind und dass die Montagekonturen derart ausgelegt sind, dass von den offenen Seiten der Montagebasisprofile her die Busleisten (13, 14) in die Montagekonturen (12) einschiebbar sind.

10. Montagesystem nach einem der vorhergehenden Ansprüche, **dadurch gekennzeichnet, dass** die Busleisten (13, 14) wenigstens eine oder mehrere Leiterbahnen oder Stromschienen (16, 17) aufweisen oder ausbilden und dass die Stromschienen (16, 17) in montierter Stellung der Busleisten in dem Querschenkel (6b) parallel zum Grundabschnitt (2) ausgerichtet sind.

11. Montagesystem nach einem der vorhergehenden Ansprüche, **dadurch gekennzeichnet, dass** die Montagebasisprofile (6) als Strangpressprofile bzw. Strangpresskörper ausgebildet sind oder dass die Montagebasisprofile (6) als Extrusionsprofile bzw. Extrusionskörper ausgebildet sind oder dass die Montagebasisprofile (6) als Spritzgießprofile bzw. Spritzgießkörper ausgebildet sind.

12. Montagesystem nach einem der vorhergehenden Ansprüche, **dadurch gekennzeichnet, dass** die Montagebasisprofile (6) wenigstens einen oder mehrere Hohlkanäle (18, 19, 20) aufweisen und/oder dass wenigstens einer der Hohlkanäle (18, 19, 20) für wenigstens eine mechanische und/oder elektrische und/oder wärmetechnische Zusatzfunktion genutzt ist.

13. Montagesystem nach einem der vorhergehenden Ansprüche, **dadurch gekennzeichnet, dass** die zu montierenden elektrischen Geräte über einen an sie angeformten oder angesetzten Komponentensockel (35) in den Aufnahmekonturen befestigt sind, welche vorzugsweise wenigstens einen oder mehrere der Rastfüße mit wenigstens einer oder mehreren Rastkonturen aufweisen, die dazu ausgelegt sind, mit den Rastkonturen, insbesondere Rastkanten (8, 10), in den Aufnahmekonturen (6) zusammenzuwirken.

14. Montagesystem nach einem der vorhergehenden Ansprüche, **dadurch gekennzeichnet, dass** der Übergangsbereich zwischen dem Grundschenkel und dem Querschenkel (6a, 6b) der Aufnahmekonturen (6) eine Rastkante ausbildet, an der ein Rastmittel, insbesondere ein Vorsprung (40), der Rastfüße (39) verrastbar ist.

15. Montagesystem nach einem der vorhergehenden Ansprüche, **dadurch gekennzeichnet, dass** der Komponentensockel (35) mehrere der Rastfüße (39) aufweist und/oder dass jeweils mehrere der Rastfüße (39) in mehreren der nebeneinander liegenden Reihen an dem Komponentensockel (35) ausgebildet sind, wobei sich der Komponentensockel über mehrere der Aufnahmekonturen senkrecht zur Haupterstreckungsrichtung hinweg erstreckt, so dass der Komponentensockel in mehreren nebeneinander liegenden Aufnahmekonturen (6) befestigbar ist.

16. Montagesystem nach einem der vorhergehenden Ansprüche, **dadurch gekennzeichnet, dass** die Komponentensockel jeweils einen Sockelabschnitt (41) und einen relativ dazu vorzugsweise von Hand beweglichen, insbesondere verschieblichen, Kontaktierungsabschnitt (42) aufweisen und dass der Kontaktierungsabschnitt Kontakte aufweist, die dazu ausgelegt sind, die Leiterbahnen oder Stromschienen (16, 17) der Busleisten (13, 14) zu kontaktieren.

17. Montagesystem nach einem der vorhergehenden Ansprüche, **dadurch gekennzeichnet, dass** der Kontaktierungsabschnitt (42) relativ zum Sockelabschnitt (41) mittels einer Verschiebemechanik beweglich, insbesondere verschieblich ausgelegt ist, die als Exzentermechanik oder Hebelmechanik oder Getriebemechanik ausgelegt ist.

18. Montagesystem nach einem der vorhergehenden Ansprüche, **dadurch gekennzeichnet, dass** der Kontaktierungsabschnitt dazu ausgelegt ist, nach einem Aufrasten des Komponentensockels (35) in die Kontaktierungsstellung bewegt zu werden, in der die Leiterbahnen oder Stromschienen der Busleisten (13, 14) kontaktiert.

19. Montagesystem nach einem der vorhergehenden Ansprüche, **dadurch gekennzeichnet, dass** an den Komponentensockel (33) ein Gehäuse eines elektrischen Gerätes befestigt oder angeformt ist

20. Montagesystem nach einem der vorhergehenden Ansprüche, **dadurch gekennzeichnet, dass** an den Komponentensockel (33) ein Gerätesockel angeformt ist, der dazu ausgelegt ist, dass auf ihn elektrische Geräte aufgesetzt werde oder der dazu ausgelegt ist, dass auf eine Baugruppe bildende elektrische Geräte aufgesetzt werden.

21. Montagesystem nach einem der vorhergehenden Ansprüche, **dadurch gekennzeichnet, dass** der Gerätesockel mit Tragschienenabschnitten (37, 38) versehen ist.

22. Montagesystem nach einem der vorhergehenden Ansprüche, **dadurch gekennzeichnet, dass** die Montagebasisprofile mit vorzugsweise werkzeugfrei montierbaren Verbindungselementen (21, 22) miteinander verbunden sind.

23. Montagesystem nach einem der vorhergehenden Ansprüche, **dadurch gekennzeichnet, dass** die Verbindungselemente (22) eine U-Form aufweisen und dass sie dazu ausgelegt sind, senkrecht zu den Grundabschnitten (2) der Montagebasisprofile (1) an zwei direkt aneinander gesetzten Montagebasisprofilen (1) montiert zu werden.

24. Montagesystem nach einem der vorhergehenden Ansprüche, **dadurch gekennzeichnet, dass** die Verbindungselemente (21) dazu ausgelegt sind, von der Seite her, d.h. in X-Richtung in nebeneinander liegende Montagebasisprofile eingeschoben zu werden und dass die Verbindungselemente derart ausgelegt sind, dass sie klammerartig direkt aneinander gereihte Montagebasisprofilen miteinander verbinden.

25. Montagesystem nach einem der vorhergehenden Ansprüche, **dadurch gekennzeichnet, dass** die Verbindungselemente als Verbindungsschienen (121) ausgelegt sind.

26. Montagesystem nach einem der Montagesystem nach einem der vorhergehenden Ansprüche, **dadurch gekennzeichnet, dass** jedes Montagebasisprofil wenigstens einen stegartigen Wandabschnitt (5) aufweist.

27. Montagesystem nach einem der vorhergehenden Ansprüche, **dadurch gekennzeichnet, dass** jedes Montagebasisprofil wenigstens einen L-förmigen Wandabschnitt (4) aufweist und einen stegartigen Wandabschnitt (5), wobei diese Wandabschnitte dazu ausgelegt sind, beim Aneinandersetzen von Montagebasisprofilen im Zusammenspiel eine T-förmige oder L-förmige oder Trennwand zur Trennung von einander benachbarten Aufnahmekonturen (6) auszubilden.

28. Montagesystem nach einem der vorhergehenden Ansprüche, **dadurch gekennzeichnet, dass** in den Aufnahmekonturen (6) Rastelemente (28) verrastbar sind, welche vorzugsweise eine Schraubbohrung (56) aufweisen, welche vorzugsweise derart ausgelegt ist, dass sie sich beim Montieren aufweitet, so dass sich das Rastelement insgesamt aufweitet und an den Rastkanten mit erhöhter Kraft gesichert ist.

29. Montagesystem nach einem der vorhergehenden Ansprüche, **dadurch gekennzeichnet, dass** aufzusetzende Geräte, deren Gehäuse oder Komponentensockel einen zum lösbaren Eingriff in die Aufnahmekontur (6) ausgelegten Riegel aufweisen, der im in die Aufnahmekontur (6) eingreifenden Zustand ein Verschieben senkrecht zur Haupterstreckungsrichtung der Montagebasisprofile verhindert und dass der Riegel vorzugsweise ein Löseelement oder eine Lösekontur. aufweist.

30. Elektrische und/oder mechanische Komponente für ein Montagesystem der vorstehenden Ansprüche, **gekennzeichnet durch** einen Komponentensockel nach einem der Kennzeichen der Ansprüche 22 bis 42.
